(19) Europäisches Patentamt
European Patent Office
Office européen des brevets

(11) **EP 4 497 315 A1**

(12) **EUROPEAN PATENT APPLICATION**

(43) Date of publication:
**29.01.2025 Bulletin 2025/05**

(21) Application number: **24185271.4**

(22) Date of filing: **28.06.2024**

(51) International Patent Classification (IPC):
*A01D 34/64* (2006.01)   *A01D 34/78* (2006.01)
*A01D 69/02* (2006.01)   *B60K 1/04* (2019.01)
*B60L 50/60* (2019.01)   *A01D 101/00* (2006.01)

(52) Cooperative Patent Classification (CPC):
**A01D 34/78; A01D 34/006; A01D 69/02;**
**B60K 1/04; B60L 15/20; B60L 50/64; B60L 50/66;**
**B60L 53/80; H02P 6/181; H02P 6/183; H02P 21/13;**
**H02P 29/032;** A01D 2101/00; B60L 2200/40;
B60L 2200/42;                                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 28.07.2023  CN 202322032782 U
28.07.2023  CN 202322029477 U
28.07.2023  CN 202310942661
28.07.2023  CN 202310942566
23.11.2023  CN 202323178135 U
23.11.2023  CN 202311581322
23.11.2023  CN 202323186185 U
23.11.2023  CN 202311578371
23.11.2023  CN 202311580240
23.11.2023  CN 202323186232 U
23.11.2023  CN 202323184380 U

(71) Applicant: **Nanjing Chervon Industry Co., Ltd.**
**Nanjing, Jiangsu 211106 (CN)**

(72) Inventors:
• **ZHANG, Min**
**Nanjing, Jiangsu 211106 (CN)**
• **LIU, Heng**
**Nanjing, Jiangsu 211106 (CN)**
• **YAMAOKA, Toshinari**
**Nanjing, Jiangsu 211106 (CN)**
• **WANG, Zhen**
**Nanjing, Jiangsu 211106 (CN)**
• **ZHAO, Yueyue**
**Nanjing, Jiangsu 211106 (CN)**
• **ZHAO, Wensheng**
**Nanjing, Jiangsu 211106 (CN)**

(74) Representative: **Sun, Yiming**
**HUASUN Patent- und Rechtsanwälte**
**Friedrichstraße 33**
**80801 München (DE)**

(54) **MANNED MOWER**

(57)     A manned mower includes a traveling wheel set; a vehicle frame; a support portion used for supporting an operator; a traveling electric motor used for driving the traveling wheel set; and a power supply assembly used for supplying power to at least the traveling electric motor and including at least one detachable battery pack. The vehicle frame includes a left bracket portion and a right bracket portion for supporting the power supply assembly, the power supply assembly is disposed between the left bracket portion and the right bracket portion, and a maximum inner width W1 of the left bracket portion and the right bracket portion in a left and right direction is less than or equal to 700 mm, and total energy of a single row of the power supply assembly along the left and right direction is greater than or equal to 8 kW·h.

EP 4 497 315 A1

(52) Cooperative Patent Classification (CPC): (Cont.)
B60L 2240/429; B60L 2240/622; B60L 2240/642;
B60L 2260/34

**Description**

**TECHNICAL FIELD**

The present application relates to an electric mowing vehicle and, in particular, to a manned mower.

**BACKGROUND**

A mower is a mechanical tool for trimming lawns, vegetation, and the like. The mower is formed by a mowing element (such as a cutting deck), a mowing electric motor, a traveling mechanism, a control assembly, a power supply, and the like. The mowing electric motor is the main working device. The control assembly may be a printed circuit board integrated with multiple electronic components required for the mower to work, such as capacitors and transistors.

Mowing electric motor control mainly adopts the field-oriented control (FOC) strategy. In the FOC control strategy, to ensure the normal operation of the electric motor, the rotor position of the electric motor needs to be detected. In the existing art, the methods for detecting the rotor position of the electric motor generally include a detection method with a position sensor and a detection method without the position sensor. In the existing detection method without the position sensor, the back electromotive force is measured by injecting high-frequency signals, the rotational speed of the electric motor is deduced by measuring the back electromotive force of the electric motor, and then the rotor position is determined by comparing the rotational speed with the actual rotational speed. During heavy-load operation, the contradiction exists between ripple and hysteresis in the rotational speed estimation, and the rotor position cannot be accurately acquired, easily causing the electric motor to stop and affecting the user experience.

**SUMMARY**

An object of the present application is to solve or at least alleviate part or all of the preceding problems. For this reason, an object of the present application is to provide a manned mower, a manned mower control method, and an outdoor traveling device to ensure that the mowing electric motor operates under a heavy load without stopping.

To achieve the preceding object, the present application adopts the technical solution below. A manned mower includes a traveling wheel set including first traveling wheels and second traveling wheels; a vehicle frame connecting the first traveling wheels to the second traveling wheels; a support portion mounted on the vehicle frame and used for supporting an operator; a traveling electric motor having a drive shaft and used for driving the traveling wheel set; and a power supply assembly used for supplying power to at least the traveling electric motor and including at least one detachable battery pack. The vehicle frame includes a left bracket portion and a right bracket portion for supporting the power supply assembly. The power supply assembly is disposed between the left bracket portion and the right bracket portion. The maximum inner width W1 of the left bracket portion and the right bracket portion in the left and right direction is less than or equal to 700 mm, and the total energy of a single row of the power supply assembly along the left and right direction is greater than or equal to 8 kW·h.

The total energy of a single row of the power supply assembly along the left and right direction is greater than or equal to 9 kW·h.

At least part of the power supply assembly is disposed behind the support portion.

The total energy of the power supply assembly is greater than or equal to 8 kW·h.

A single row of the power supply assembly includes one battery pack.

A single row of the power supply assembly includes multiple battery packs.

The power supply assembly includes multiple single rows, and at least one of the multiple single rows is disposed along a first direction basically parallel to the left and right direction.

The energy of the at least one detachable battery pack is greater than or equal to 2 kW·h.

A battery pack of the at least one detachable battery pack includes multiple cells, and the multiple cells include a lithium iron phosphate cell.

The height H of the power supply assembly in the up and down direction is greater than or equal to 330 mm, and the width of the power supply assembly in the left and right direction is greater than or equal to 600 mm and less than or equal to 700 mm.

The power supply assembly further includes a connector for mounting the at least one detachable battery pack to connect the at least one detachable battery pack to the vehicle frame, and the at least one detachable battery pack and the connector are used as a whole capable of being removed from the manned mower and mounted to another manned mower to supply power to another manned mower.

The connector includes at least one first connector and at least one second connector, and a first connector of the at least one first connector and a second connector of the at least one second connector have different shapes.

The total number of battery packs adaptable to the first connector is different from the total number of battery packs adaptable to the second mount.

The connector includes at least a first coupling portion electrically connected to a battery pack of the at least one detachable battery pack and a third coupling portion for limiting the battery pack mounted on the connector, where the first coupling portion and the third coupling portion are opposite to each other.

The first coupling portion includes a locking assembly and a compartment terminal assembly; the battery pack includes a terminal assembly adaptable to the compartment terminal assembly; and a rated value of the current outputted by the battery pack through the connector is greater than or equal to 120 A.

A power supply assembly for supplying power to a manned mower is provided. The manned mower includes a traveling wheel set including first traveling wheels and second traveling wheels; a vehicle frame connecting the first traveling wheels to the second traveling wheels; and a traveling electric motor having a drive shaft and used for driving the traveling wheel set. The power supply assembly includes a battery pack and a connector for mounting the battery pack to connect the battery pack to the vehicle frame. The connector includes at least one first coupling portion and at least one second coupling portion.

A first coupling portion of the at least one first coupling portion is detachably connected to the battery pack; and a second coupling portion of the at least one second coupling portion is configured to be detachably mounted to a first manned mower or a second manned mower.

The power supply assembly includes at least one first connector and at least one second mount, where the number of battery packs adaptable to a first connector of the at least one first connector is different from the number of battery packs adaptable to a second connector of the at least one second connector.

The connector includes a battery holder.

A manned mower includes a traveling wheel set including first traveling wheels and second traveling wheels; a vehicle frame connecting the first traveling wheels to the second traveling wheels; a support portion mounted on the vehicle frame and used for supporting an operator; a traveling electric motor having a drive shaft and used for driving the traveling wheel set; and a power supply assembly used for supplying power to at least the traveling electric motor and including at least one detachable battery pack. The vehicle frame includes a left bracket portion and a right bracket portion for supporting the power supply assembly. The power supply assembly is disposed between the left bracket portion and the right bracket portion.

The maximum inner width W1 of the left bracket portion and the right bracket portion in the left and right direction is less than or equal to 700 mm, and the height H of the power supply assembly in the up and down direction is greater than or equal to 330 mm.

The energy of the at least one detachable battery pack is greater than or equal to 2 kW·h.

**BRIEF DESCRIPTION OF DRAWINGS**

FIG. 1 is a perspective view of an electric wheeled vehicle as an example of the present application.

FIG. 2 is a perspective view of an electric wheeled vehicle as an example of the present application from another perspective.

FIG. 3 is a perspective view of a power supply assembly of the electric wheeled vehicle in FIG. 1.

FIG. 4 is a schematic view illustrating that a power supply assembly is adapted to different vehicles as an example of the present application.

FIG. 5A is a perspective view of a first connector and a battery pack of the power supply assembly in FIG. 3.

FIG. 5B is a perspective view of a second connector and multiple battery packs of the power supply assembly in FIG. 3.

FIG. 6 is a perspective view of a first connector in FIG. 5A.

FIG. 7 is a perspective view of a first connector in FIG. 5A from another perspective.

FIG. 8 is a perspective view of a power supply assembly mounted on a vehicle frame.

FIG. 9 is a perspective view of a terminal assembly of the battery pack in FIG. 5A.

FIG. 10A is a schematic view of a power supply assembly as an example of the present application.

FIG. 10B is a schematic view of a power supply assembly as another example of the present application.

FIG. 10C is a schematic view of a power supply assembly as another example of the present application.

FIG. 11 is a schematic view of a connector and a second battery pack as an example of the present application.

FIG. 12 is a perspective view of a vehicle frame, a power supply assembly, and a traveling electric motor of a manned mower in FIG. 1.

FIG. 13 is an exploded view of a seat and a seat mounting structure of a manned mower in FIG. 1.

FIG. 14A is a perspective view of a seat base plate and a locking assembly in a locking state in FIG. 13.

FIG. 14B is a perspective view of a seat base plate and a locking assembly in an unlocking state in FIG. 13.

FIG. 15A is a schematic view of a locking state of a locking assembly of the seat in FIG. 13.

FIG. 15B is a schematic view of an unlocking state of a locking assembly of the seat in FIG. 13.

FIG. 16 is a perspective view of a central control assembly of a manned mower in FIG. 1.

FIG. 17 is a perspective view of a central control assembly of a manned mower in FIG. 1 from another perspective.

FIG. 18 is an exploded view of a central control assembly of a manned mower in FIG. 1.

FIG. 19 is a perspective view of a circuit board assembly of the central control assembly in FIG. 16.

FIG. 20 is a perspective view of a second sealing member of the central control assembly in FIG. 16.

FIG. 21 is a perspective view of an anti-overturn device of a manner mower in FIG. 1.

FIG. 22 is an exploded view of a connection assembly of the anti-overturn device in FIG. 21.

FIG. 23 is an exploded view of a bending assembly of the anti-overturn device in FIG. 21.

FIG. 24 is a perspective view of a vehicle frame of a manned mower in FIG. 1.

FIG. 25 is a circuit schematic diagram of a driver circuit of a manned mower as an example of the present application.

FIG. 26 is a structural view of a circuit substrate of a manned mower as an example of the present application.

FIG. 27A is a schematic view of a mounting structure of a heat sink block of a manned mower as an example of the present application.

FIG. 27B is a top view of a heat sink block of a manned mower as an example of the present application.

FIG. 28A is a schematic view of a mounting structure of a power bracket of a manned mower as an example of the present application.

FIG. 28B is a structural view of a power bracket of a manned mower as an example of the present application.

FIG. 29A is a schematic view of a circuit board mounting structure of a manned mower as an example of the present application.

FIG. 29B is a sectional view of a circuit board mounting structure of a manned mower as an example of the present application.

FIG. 30 is a flowchart of a manned mower control method as an example of the present application.

FIG. 31 is a flowchart of another manned mower control method as an example of the present application.

FIG. 32 is a control block diagram of a drive motor of a manned mower as an example of the present application.

FIG. 33 is a structural view of a display device of a manned mower as an example of the present application.

FIG. 34 is a circuit schematic diagram of a power supply circuit of a manned mower as an example of the present application.

FIG. 35 is a perspective view of a mowing element of a manned mower as an example of the present application.

FIG. 36A is a structural diagram of an auxiliary power supply of a manned mower as an example of the present application.

FIG. 36B is a structural diagram of another auxiliary power supply of a manned mower as an example of the present application.

FIG. 37 is a structural diagram of a soft start module of a manned mower as an example of the present application.

FIG. 38 is a schematic diagram of a power communication structure of a manned mower as an example of the present application.

FIG. 39A is a circuit schematic diagram of a power adapter of a manned mower as an example of the present application.

FIG. 39B is a circuit schematic diagram of another power adapter of a manned mower as an example of the present application.

FIG. 39C is a circuit schematic diagram of another power adapter of a manned mower as an example of the present application.

FIG. 40A is a flowchart of a power distribution method for a manned mower as an example of the present application.

FIG. 40B is a flowchart of another power distribution method for a manned mower as an example of the present application.

FIG. 41 is a schematic diagram of a communication module of a manned mower as an example of the present application.

FIG. 42 is a perspective view of a traveling electric motor equipped with an eddy-current sensor of a manned mower as an example of the present application.

FIG. 43 is an exploded view of the traveling electric motor equipped with the eddy-current sensor in FIG. 42.

FIG. 44 is an exploded view of the traveling electric motor equipped with the eddy-current sensor in FIG. 42 from another perspective.

FIG. 45 is a perspective view of a traveling electric motor equipped with an eddy-current sensor as another example of the present application.

FIG. 46 is an exploded view of the traveling electric motor equipped with the eddy-current sensor in FIG. 45.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear"" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

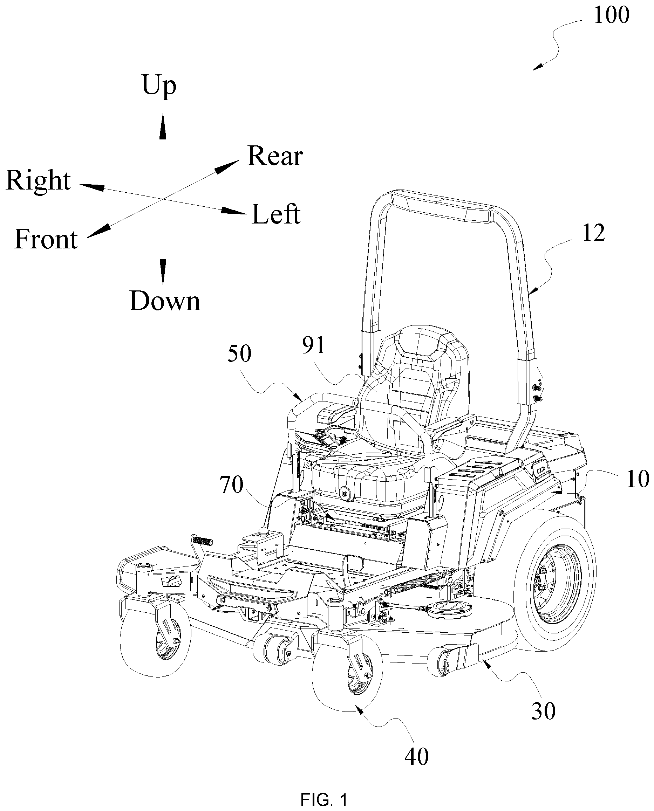

As shown in FIG. 1, an outdoor traveling device 100 disclosed in the present application may specifically be an electric wheeled device, such as an electric mowing vehicle or a manned mower, on which the user rides or stands to operate the electric wheeled device to trim lawns and other vegetation. In this specification, front, rear, left, right, up, and down are described as directions shown in FIG. 1. Specifically, when the user rides on the outdoor traveling device 100 on the ground, it is defined that the direction which the user faces is front, the direction which the user faces away from is rear, the direction on the left-hand side of the user is left, the direction on the righthand side of the user is right, the direction toward the ground is down, and the direction away from the ground is up. Of course, the outdoor traveling device disclosed in the present application further includes a utility terrain vehicle (UTV). In the related art, the UTV includes a four-wheel all-terrain vehicle (ATV), a utility vehicle, and a recreational track car. In addition, the outdoor traveling device disclosed in the present application further includes a manned snow thrower, a push mower, a push snow thrower, an electric motorcycle, and the like.

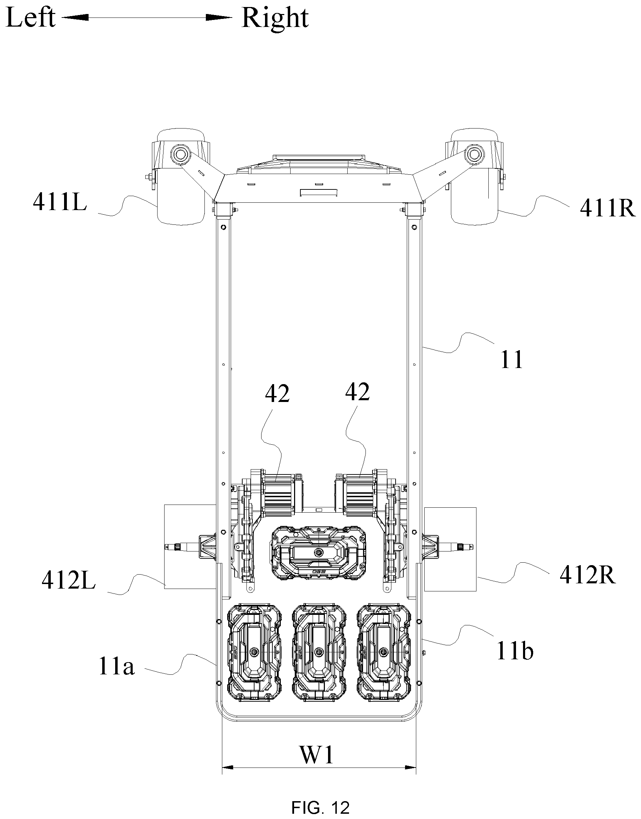

As shown in FIGS. 1 to 3, the outdoor traveling device 100 includes a housing assembly 10, a power supply assembly 20, and a traveling assembly 40. The traveling assembly 40 includes a traveling wheel set 41 and traveling electric motors 42 (referring to FIG. 12). The traveling electric motor 42 has a drive shaft and is used for driving the traveling wheel set 41 to rotate. The power supply assembly 20 is used for supplying power to the outdoor traveling device 100.

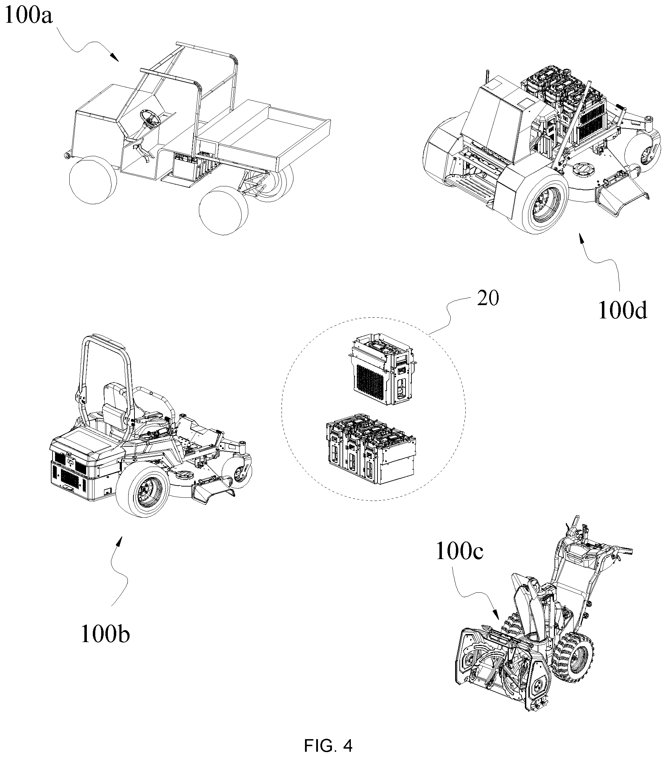

The power supply assembly 20 includes battery packs 21 and connectors 22 for mounting the battery packs 21 to connect the battery packs 21 to the outdoor traveling device 100. The battery packs 21 are detachably connected to the connectors 22, and the connectors 22 are detachably mounted to the outdoor traveling device 100 so that the battery packs 21 can be taken out to adapt to other electrical devices. Other electrical devices include, but are not limited to, the UTV, the push mower, the push snow thrower, and the manned mower. Specifically, as shown in FIG. 4, the power supply assembly 20 of the outdoor traveling device 100 is detachably removed from the outdoor traveling device 100 and then mounted to a UTV 100a, the push mower, a push snow thrower 100c, a riding mower 100b, and a stand-on mower 100d to supply power to the preceding electrical devices to implement the functions of the preceding electrical devices.

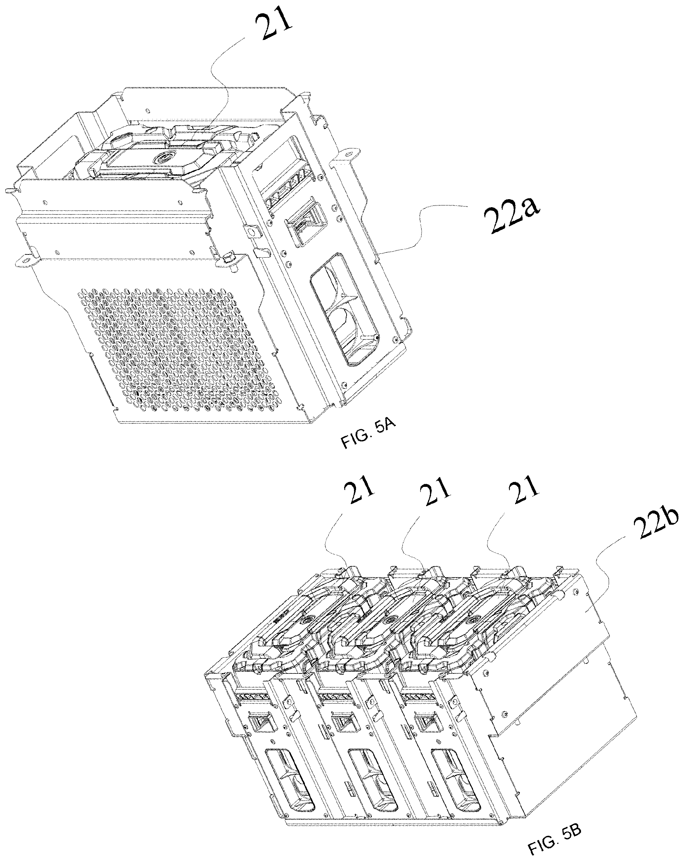

In some examples, the connectors 22 of the power supply assembly 20 include a first connector 22a and a second connector 22b having different appearance features. Specifically, the first connector 22a is configured to be electrically connected to one battery pack 21, and the second connector 22b is configured to be electrically connected to at least two battery packs 21. FIGS. 5A and 5B show specific examples of the first connector 22a and the second connector 22b, respectively. One battery pack 21 is detachably mounted inside the first connector 22a, and three battery packs 21 are detachably mounted inside the second connector 22b. The external dimension of the second connector 22b is greater than the external dimension of the first connector 22a. In this manner, the power requirements of different outdoor traveling devices can be satisfied by providing connectors 22 with different external dimensions for mounting the battery packs 21. For example, for a push mower 100b or the push snow thrower 100c, the power supply assembly may use the first connector 22a for mounting the battery pack. For the UTV 100a, multiple first connectors 22a to which the battery packs 21 are mounted may be used, or one or more second connectors 22b to each of which at least two battery packs 21 are mounted may be used, or a combination of the first connectors 22a and the second connectors 22b may be used. In this manner, the connectors for mounting the battery packs are reasonably selected and arranged in conjunction with the power requirements and the spatial features of the outdoor traveling device, thereby improving the versatility of the power supply assembly among various electrical devices, making the application scenarios of the power supply assembly wider, and providing convenience for the user.

In some examples, the connector 22 may be a battery holder or another type of structure for mounting the battery pack to the manned mower. In the following, a battery holder 22 is used to replace the connector 22, a first battery holder 22a is used to replace the first connector 22a, and a second battery holder 22b is used to replace the second connector 22b. Of course, the connector may have other appearance features. For example, the connector is a base.

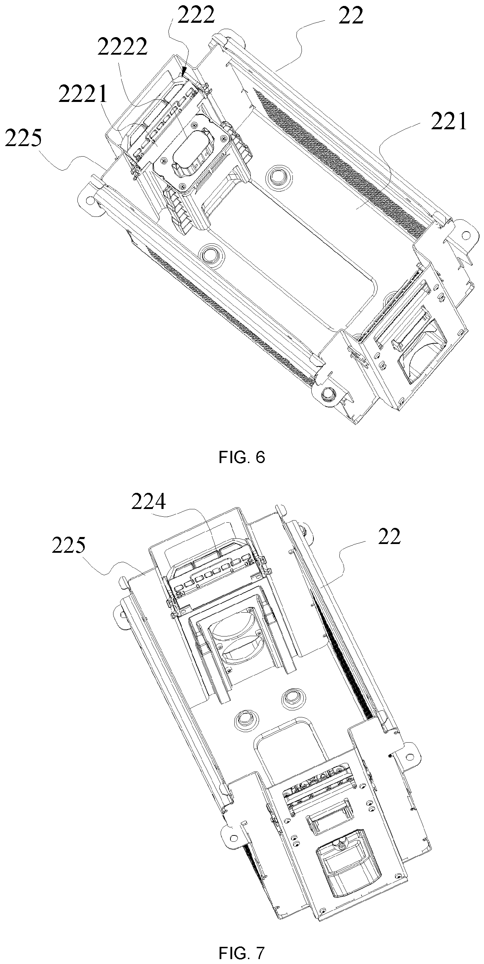

Optionally, as shown in FIGS. 6 and 7, the battery holder 22 is formed with an accommodation space 221 for accommodating the battery pack 21, and the battery pack 21 is detachably disposed in the accommodation space 221. Specifically, the connector 22 is formed with or connected to at least one first coupling portion 222 and at least one second coupling portion. The first coupling portion 222 is used for achieving the detachable electrical connection between the battery holder 22 and the battery pack 21. The second coupling portion is used for achieving the detachable connection between the battery holder 22 and the outdoor traveling device 100. In some examples, the first coupling portion 222 is not only used for achieving the electrical connection with the battery pack 21 but can also be used for fixedly mounting the battery pack 21 in the accommodating space 221 of the battery holder 22, thereby avoiding the following: due to vibration when the outdoor traveling device 100 is driving or implementing a working function, the battery pack 21 wobbles relative to the battery holder 22, causing poor contact at the first coupling portion 222. The second coupling portion may be a screw or a specially designed mechanism, such as a snap or a snap clip structure and may be designed by those skilled in the art according to requirements.

As shown in FIG. 6, the battery holder 22 includes a compartment 225 and the first coupling portion 222 disposed on the compartment 225. The first coupling portion 222 may include a locking assembly 2221 and a compartment terminal assembly 2222. The locking assembly 2221 is disposed on the compartment 225 of the battery holder 22 and is used for locking the battery pack 21 in the compartment 225.

In some examples, the compartment terminal assembly 2222 includes positive/negative charging terminals, positive/negative discharging terminals, and a communication terminal that are disposed on a terminal block. The positive/negative charging terminals, the positive/negative discharging terminals, and the communication terminal may be cylindrical metal terminals. Optionally, the positive charging terminal and the positive discharging terminal in the compartment terminal assembly 2222 may be the same terminal, or the negative charging terminal and the negative discharging terminal in the compartment terminal assembly 2222 may be the same terminal. During charging or discharging, the communication terminal may be shared for the communication with an adapter or a self-propelled device. Optionally, the positive/negative charging terminals, the positive/negative discharging terminals, and the communication terminal are disposed on the terminal block. A guide structure is further disposed on the terminal block, or the terminal block can form a guide structure. A corresponding structure matching the guide structure is disposed on the battery pack 21. After the guide structure mates with the corresponding structure on the battery pack 21, the compartment terminal assembly 2222 can float within a preset distance range. Therefore, the following can be avoided: after the battery pack 21 is mounted on the battery holder, the connection terminals are connected unstably or damaged due to uncontrollable factors such as vibration. In an example, the guide structure may be a guide column, and the corresponding structure that matches the guide structure and is on the battery pack is a guide groove.

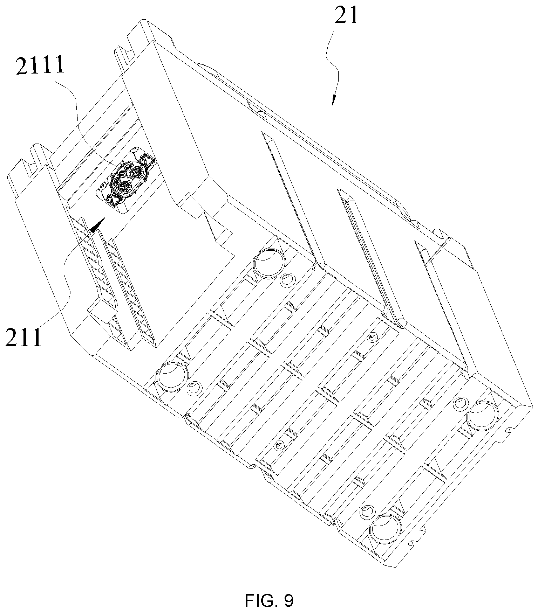

As shown in FIG. 9, to adapt to the first coupling portion 222 of the battery holder 22 in FIG. 6, a battery pack interface 211 is disposed on the battery pack 21 so that the battery pack 21 is pluggably mounted to the first coupling portion 222. The battery pack interface 211 mates with the first coupling portion 222 so that the battery pack 21 is not only mechanically connected to the outdoor traveling device 100 but also electrically connected to the outdoor traveling device 100. Specifically, the battery pack interface 211 includes a terminal assembly 2111 that matches the charging and discharging terminals and the communication terminal in the compartment terminal assembly 2222 of the battery holder 22.

Optionally, the battery holder 22 is further formed with a slide rail 2221 adapted to the battery pack 21 and used for guiding the battery pack 21 to be slidably mounted to the battery holder 22. Optionally, as shown in FIG. 7, in addition to the first coupling portion 222, the battery holder 22 further includes a third coupling portion 224 for guiding the insertion and removal of the battery pack 21 and limiting the battery pack 21. The third coupling portion 224 and the first coupling portion 222 are disposed on two opposite side surfaces of the battery holder 22. The advantage of such a design is that the battery pack 21 can be fixed in the battery holder to the maximum extent, thereby avoiding the following: the connection between the battery pack 21 and the battery holder 22 is unstable due to the external wobble.

By using the compartment terminal assembly 2222 of the battery holder 22 and the terminal assembly 2111 of the battery pack 21 that are in the preceding forms and compatible, the battery pack as a whole can satisfy IPX7 waterproof and dustproof requirements, and the battery holder can satisfy IPX5 waterproof requirements. The average discharge current of the battery pack 21 is greater than or equal to 30 A, which may be, for example, 30 A, 35 A, or 40 A. Optionally, the rated current delivered by the battery pack 21 may be greater than or equal to 120 A, or the instantaneous peak current may be about 350 A.

In some examples, the power supply assembly 20 includes a first battery holder 22a and a second battery holder 22b. The first battery holder 22a and the second battery holder 22b have different dimensions. The first battery holder 22a and the second battery holder 22b can accommodate different numbers of battery packs. For example, the first battery holder 22a can accommodate one battery pack, and the second battery holder 22b can accommodate two, three, or more battery packs. The difference between the second battery holder 22b and the first battery holder 22a disclosed in the present application is that the first battery holder 22a has one first coupling portion 222 that can adapt to one battery pack 21, and the second battery holder 22b has multiple first coupling portions 222 for adapting to multiple battery packs 21.

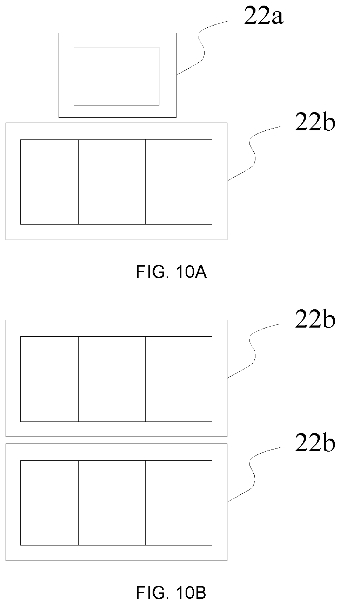

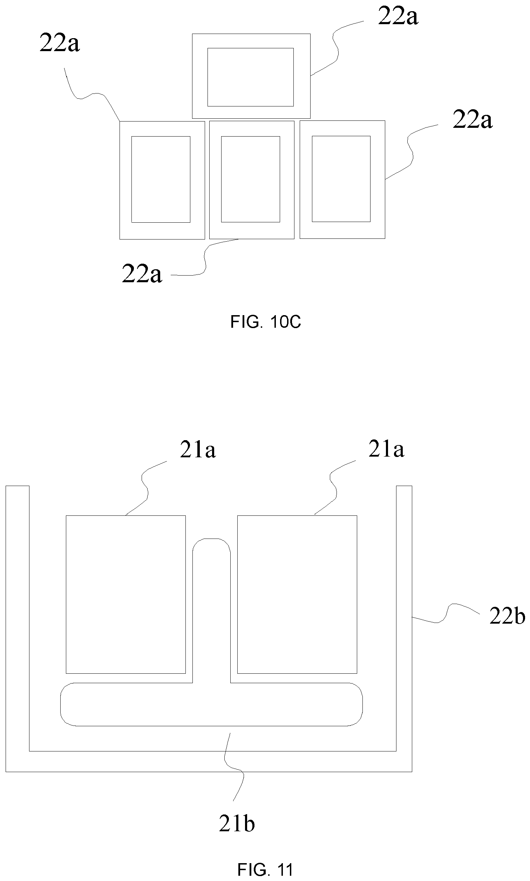

The power supply assembly 20 disclosed in the present application may be formed by one or more first battery holders 22a and second battery holders 22b combined according to actual requirements. As shown in FIG. 10A, in some examples, the power supply assembly 20 may include one first battery holder 22a and one second battery holder 22b. The first battery holder 22a accommodates one battery pack 21, and the second battery holder 22b accommodates three battery packs 21. The first battery holder 22a is disposed on the front side of the second battery holder 22b. In other examples, as shown in FIG. 10B, the power supply assembly 20 may be formed by two second battery holders 22b, each of which accommodates three battery packs 21. In other examples, as shown in FIG. 10C, the power supply assembly 20 may be formed by four first battery holders 22a arranged in two rows and two columns. In this manner, when power supply assemblies are designed for vehicles of different models, the appropriate layout can be selected according to the actual space and energy requirements, and an additional battery holder does not need to be provided, thereby forming a modular design of the power supply assemblies.

In this example, the weight of the battery pack 21 is greater than or equal to 9 kg. In an example, the weight of the battery pack is greater than or equal to 10 kg, or greater than or equal to 11 kg, or greater than or equal to 12 kg, or greater than or equal to 13 kg, or greater than or equal to 14 kg, or greater than or equal to 15 kg. For example, the weight of the battery pack is 9 kg, 10 kg, 15 kg, or the like. The nominal voltage of the battery pack 21 is about 56 V, which may be, for example, 54 V or 58 V. In an example, the nominal voltage of the battery pack 21 is greater than or equal to 56 V, or greater than or equal to 50 V, or greater than or equal to 48 V, or greater than or equal to 40 V. The capacity of the battery pack 21 is greater than or equal to 20 Ah. In an example, the capacity of the battery pack 21 is greater than or equal to 30 Ah, or greater than or equal to 40 Ah, or greater than or equal to 50 Ah. For example, the capacity of the battery pack 21 may be 20 Ah, 30 Ah, 40 Ah, 50 Ah, or the like. The ratio of the capacity to the weight of the battery pack 21 is greater than or equal to 2 Ah/kg, for example, 2 Ah/kg, 4 Ah/kg, or 5 Ah/kg. Optionally, the energy of the battery pack 21 is greater than or equal to 2 kW·h. In an example, the energy of the battery pack 21 is greater than or equal to 3 kW·h, or greater than or equal to 4 kW·h, or greater than or equal to 5 kW·h. For example, the energy of the battery pack 21 may be 2 kW·h, 3 kW·h, 4 kW·h, 5 kW·h, or the like. In some examples, the battery pack disclosed in the present application may include a lithium iron phosphate cell. In some examples, the battery pack 21 may be a supercapacitor, also referred to as an electrochemical capacitor.

In some examples, as shown in FIG. 11, the second battery holder 22b can adapt to second battery packs 21a that are different from the battery pack 21. Specifically, two second battery packs 21a are mounted to an adapter 21b and electrically connected to the adapter 21b, and the adapter 21b is electrically connected to the first coupling portions 222 of the second battery holder 22b. The energy of the second battery pack 21a is greater than or equal to 0.1 kW·h and less than 2 kW·h. Optionally, the energy of the second battery pack 21a is greater than or equal to 0.1 kW·h. In some examples, the energy of the second battery pack 21a is greater than or equal to 0.4 kW·h. In some examples, the energy of the second battery pack 21a is greater than or equal to 0.6 kW·h. In this example, the second battery pack 21a is a lithium cell or a nickel-cadmium battery or is made of graphene or other materials to achieve different combinations of battery characteristics.

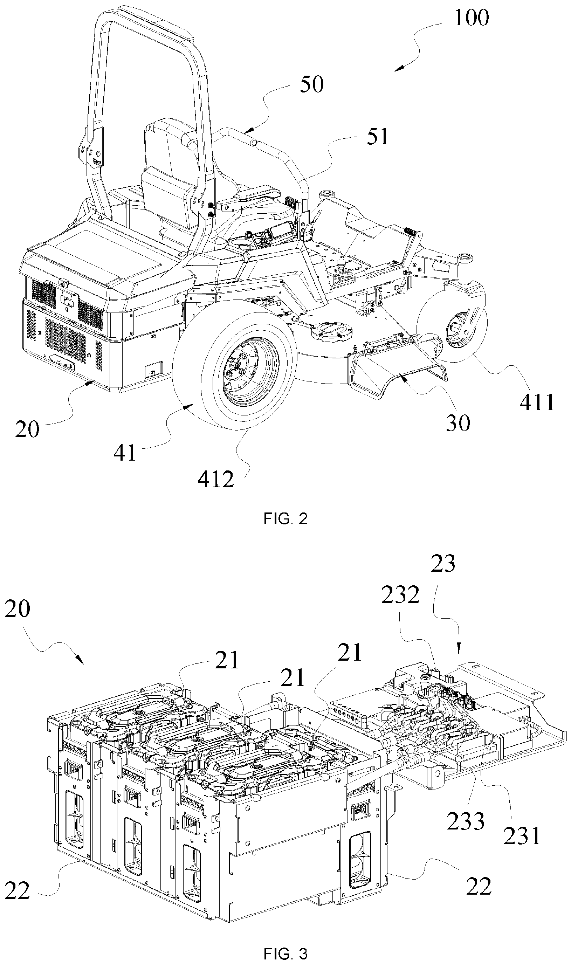

With continued reference to FIG. 3, the power supply assembly 20 further includes a power management module 23 that includes a housing 231, and all signal interfaces 232 and high current interfaces 233 are directly made on the housing 231 with no additional wire harness so that it can be ensured that the power management module 23 is waterproof to the IPX5 level. Specifically, a wire terminal cap is added to a wiring terminal of the high current interface 232, and a waterproof rubber sleeve is added to a binding post.

With continued reference to FIGS. 1 to 3, 8, and 12, when the outdoor traveling device 100 is specifically the manned mower, the manned mower includes the housing assembly 10, the power supply assembly 20, a mowing assembly 30, the traveling assembly 40, an operating assembly 50, a vehicle frame 11, and a support portion. The vehicle frame 11 extends basically along the front and rear direction, and the vehicle frame 11 and the housing assembly 10 form a body of the manned mower for mounting the power supply assembly 20, the mowing assembly 30, the traveling assembly 40, and the support portion. The traveling assembly 40 is used for supporting the body. The operating assembly 50 includes operating lever assemblies 51 operated by the user to control the manned mower to move forward, move backward, and turn. In some examples, the operating assembly 50 may further include a steering wheel assembly. The support portion is mounted on the vehicle frame 11 and used for supporting an operator. Optionally, the support portion includes a seat 91. The seat 91 is mounted to the vehicle frame 11 and used for the user to sit on. Optionally, the support portion further includes a platform for the user to stand on. The power supply device 20 is used for supplying energy to the mowing assembly 30, the traveling assembly 40, and the like so that the manned mower can be used as a power tool capable of carrying a person. The electric manned mower is more environmentally friendly and more energy-efficient than a fuel-based manned mower. In some examples, the manned mower further includes a grass collecting device for collecting grass clippings cut by the mowing assembly 30. The grass collecting device includes a grass collecting basket assembly detachably mounted behind the seat 91.

In some examples, the width of the power supply assembly 20 in the left and right direction is greater than or equal to 600 mm and less than or equal to 700 mm. In some examples, the width of the power supply assembly 20 in the left and right direction may be 620 mm, 640 mm, 660 mm, or 680 mm. The traveling assembly 40 includes the traveling wheel set 41 and the traveling electric motors 42. The traveling electric motor 42 has a drive shaft and is used for driving the traveling wheel set 41 to rotate. The traveling wheel set 41 is connected to the body to support the body. The traveling wheel set 41 can at least drive the manned mower to travel along the front and rear direction. Optionally, the traveling wheel set 41 includes first traveling wheels 411 and second traveling wheels 412. The first traveling wheels 411 include a first left traveling wheel 411L and a first right traveling wheel 411R. The second traveling wheels 412 include a second left traveling wheel 412L and a second right traveling wheel 412R. The traveling electric motors 42 drive the first travel wheels 411 or the second travel wheels 412 to rotate and are used for implementing a traveling function of the manned mower. Optionally, one, two, three, or four traveling electric motors 42 may be provided. In this example, two traveling electric motors 42 are provided, and the two traveling electric motors 42 drive the a second left traveling wheel 412L and the second right traveling wheel 412R, respectively so that the manned mower can turn in other directions deviating from the front and rear direction.

The power supply assembly 20 is used for supplying power to at least the traveling electric motors 42. The power supply assembly 20 includes at least one battery pack 21. The at least one battery pack 21 is detachably mounted to the manned mower. The energy of the at least one battery pack of the power supply assembly 20 is greater than or equal to 2 kW·h. The vehicle frame 11 includes a left bracket portion 11a and a right bracket portion 11b for supporting the power supply assembly 20. The power supply assembly 20 is disposed between the left bracket portion 11a and the right bracket portion 11b. The maximum inner width W1 of the left bracket portion 11a and the right bracket portion 11b in the left and right direction is less than or equal to 700 mm, and the total energy of a single row of the power supply assembly 20 is greater than or equal to 8 kW·h. Optionally, the maximum inner width W1 of the left bracket portion 11a and the right bracket portion 11b in the left and right direction is less than or equal to 700 mm, and the total energy of a single row of the power supply assembly 20 is greater than or equal to 9 kW·h. Optionally, the maximum inner width W1 of the left bracket portion 11a and the right bracket portion 11b in the left and right direction is less than or equal to 660 mm, and the total energy of a single row of the power supply assembly 20 is greater than or equal to 8 kW·h. Optionally, the maximum inner width W1 of the left bracket portion 11a and the right bracket portion 11b in the left and right direction is less than or equal to 660 mm, and the total energy of a single row of the power supply assembly 20 is greater than or equal to 9 kW·h. It is to be explained that the left bracket portion 11a and the right bracket portion 11b of the vehicle frame 11 for supporting the power supply assembly 20 refer to the rear part of the vehicle frame 11. In other examples, the support part may have other forms. To sum up, the preceding part should be understood as a vehicle bracket around the power supply assembly. The vehicle bracket may be integrally formed with the vehicle frame or may be connected to the vehicle frame by screws or welding.

In the present application, at least part of the power supply assembly 20 is disposed behind the support portion. The total energy of the power supply assembly 20 is greater than or equal to 8 kW·h. Optionally, the total energy of the power supply assembly 20 is greater than or equal to 10 kW·h, 15 kW·h, 20 kW·h, or 25 kW·h. The height of the power supply assembly 20 in the up and down direction is greater than or equal to 330 mm. Optionally, the height of the power supply assembly 20 in the up and down direction is greater than or equal to 350 mm.

Specifically, a single row of the power supply assembly 20 includes one battery pack 21. Optionally, a single row of the power supply assembly 20 includes multiple battery packs. Optionally, the power supply assembly 20 includes multiple single rows, at least one of which is provided along a first direction, and the first direction is basically parallel to the left and right direction.

The power supply assembly 20 includes at least one battery pack 21, and the battery pack 21 has a relatively large capacity. Of course, the power supply assembly 20 may include multiple battery packs arranged in a specific arrangement manner. At least one of the multiple battery packs may include a lithium iron phosphate cell.

As shown in FIG. 1 and FIGS. 13 to 15B, the manned mower includes various devices, such as a central control assembly 70 located on the rear part of or in the lower region of the seat 91. The user checks or repairs these devices conveniently by changing the position of the seat 91. The central control assembly 70 in the present application is applicable to other forms of electric mowers, such as a smart mower.

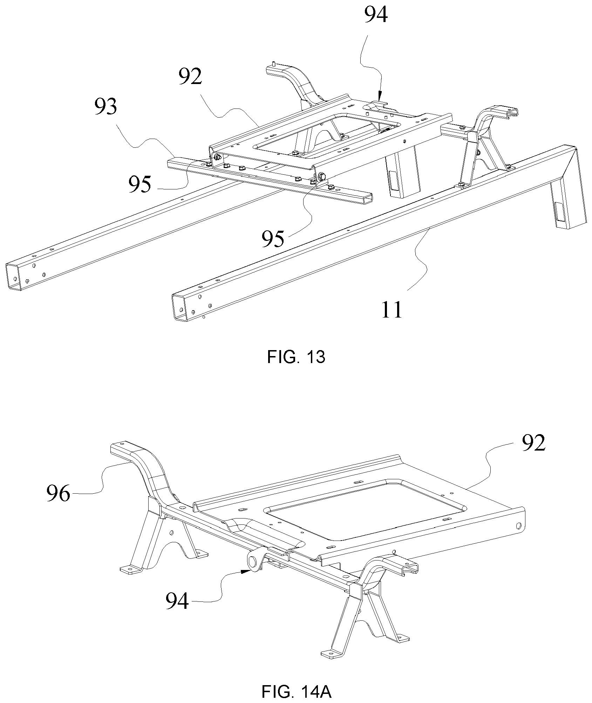

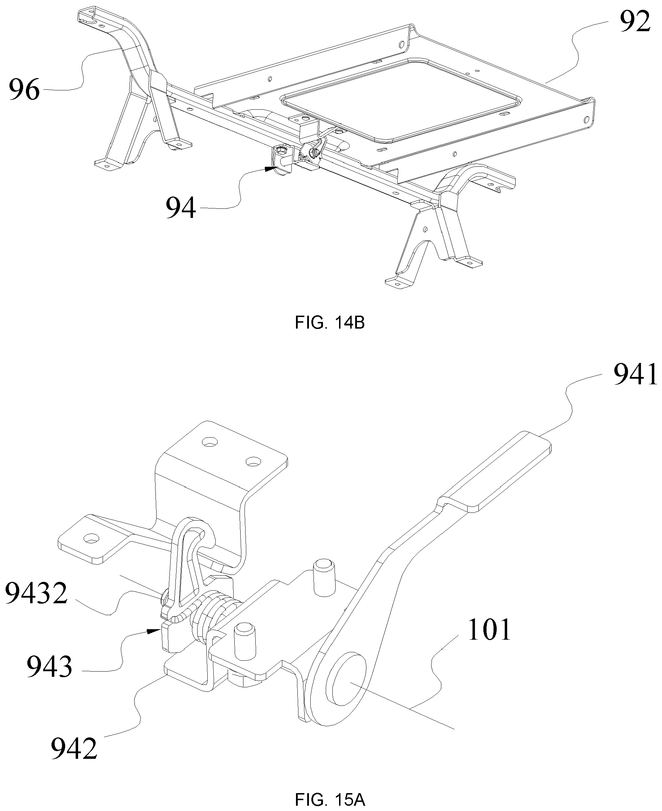

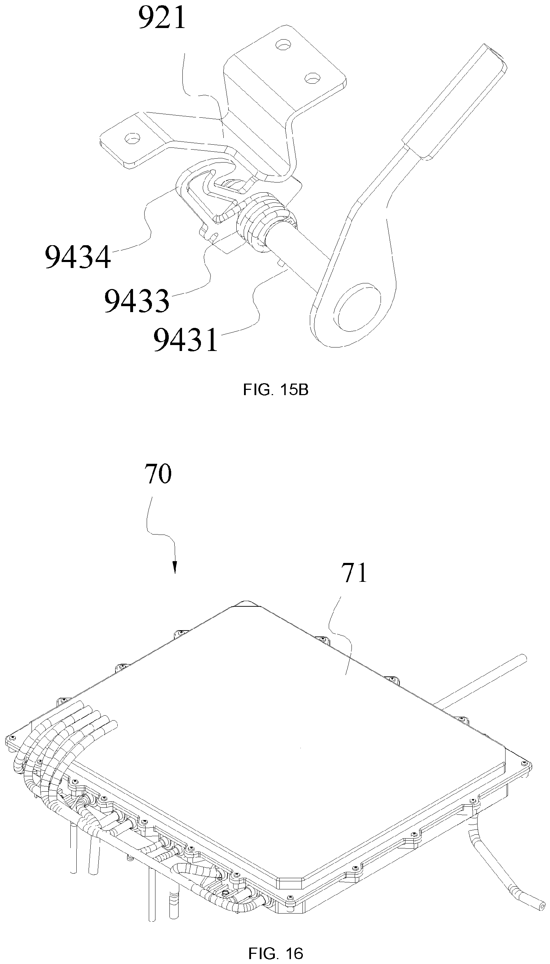

A seat mounting structure disclosed in the present application for mounting the seat 91 to the manned mower includes a base plate 92, a connecting plate 93, and a locking assembly 94. The base plate 92 is supported on the vehicle frame 11 through a bracket 96, the seat 91 is integrally mounted on the base plate 92, and the connecting plate 93 is located in front of the seat 91 and is connected to the vehicle frame 11. Optionally, the connecting plate 93 and the base plate 92 are connected by step bolts 95 so that the seat 91 can flip around the step bolts 95. In some examples, the maximum angle at which the seat 91 flips around is limited by a steel wire rope. The locking assembly 94 has an unlocking state in which the seat 91 is allowed to flip over relative to the vehicle frame 11 shown in FIGS. 14B and 15B or a locking state in which the seat 91 is prohibited from flipping over relative to the vehicle frame 11 shown in FIGS. 14A and 15A. When the locking assembly 94 is in the locking state, the locking assembly 94 can prevent the seat 91 from swinging upward relative to the vehicle frame 11. When the locking assembly 94 is in the unlocking state, the locking assembly 94 can allow the seat 91 to swing upward relative to the vehicle frame 11. Optionally, the locking assembly 94 includes an operating member 941 and a mounting assembly 942 for mounting the operating member 941 to the vehicle frame 11, and the operating member 941 is configured to rotate about a first axis 101 to switch the locking assembly 94 from the locking state to the unlocking state. The mounting assembly 942 is mounted below the vehicle frame 11.

The locking assembly 94 further includes a connection assembly 943 for connecting the operating member 941 to the mounting assembly 942. Optionally, the connection assembly 943 is disposed between the operating member 941 and the mounting assembly 942, and the mounting assembly 942 is fixedly mounted to the vehicle frame 11 and is at least partially located below the seat 91. In some examples, the connection assembly 943 includes a rotary shaft 9431, a clamping ring 9432, a torsion spring 9433, and a locking member 9434. A limiting portion is formed on or connected to the base plate, and the limiting portion is adapted to the locking member so that the locking assembly has the unlocking state in which the seat is allowed to flip over relative to the vehicle frame or the locking state in which the seat is prohibited from flipping over relative to the vehicle frame. The operating member 941 is connected to the rotary shaft 9431 through a flat portion, and the rotary shaft 9431 is connected to the locking member 9434 through a flat portion. The torsion spring 9433 and the clamping ring 9432 are sleeved on the rotary shaft 9431 and located between the operating member 941 and the locking member 9434. When the user rotates the operating member 941 about the first axis 101, the operating member 941 drives the rotary shaft 9431 to rotate, and the rotary shaft 9431 drives the locking member 9434 to rotate so that the locking member 9434 is disengaged from a limiting member 921 on the base plate 92. Of course, the limiting member 921 may be a hook or a limiting groove. The locking assembly 94 disclosed in the present application has a limiting position on the base plate 92 so that the rotational activity region of the locking member 9434 is limited to a desired range. When the seat 91 falls, the base plate 92 falls at the same time, and the limiting member 921 on the base plate 92 mates with the locking member 9434 to complete the locking. The operating member 941 is toggled to drive the locking member 9434 to move and disengage from the limiting member 921 to complete unlocking. After the operating member 941 is released, the locking assembly 94 is reset under the action of the torsion spring 9433. In some examples, the limiting member 921 may be integrally formed with the base plate 92. Of course, the limiting member 921 may be mounted on the base plate 92 through a screw connection structure.

In some examples, the locking assembly 94 includes the operating member 941 and the locking member 9434, and the operating member 941 is configured to be operable to switch the locking member 9434 from the locking state to the unlocking state. The locking assembly 94 in the unlocking state is disengaged from the seat 91. It is to be understood that when the locking assembly 94 in the unlocking state is disengaged from the seat 91, the seat 91 may flip over, the locking assembly 94 does not move, and no direct mechanical connection exists between the seat 91 and the locking assembly 94.

In both the locking state and the unlocking state, the locking assembly 94 disclosed in the present application is fixedly mounted on the vehicle frame 11 so that it is more convenient to flip the seat. It is to be understood that when the locking assembly 94 is in the unlocking state, the locking member 9434 is disengaged from the seat 91. On the other hand, most of the structures of the locking assembly 94 disclosed in the present application are mounted below the vehicle frame 11 so that the space near the seat in the front and rear direction or the left and right direction can be fully saved, thereby avoiding affecting the mounting space of other devices (such as the power supply assembly) mounted near the seat.

When the manned mower travels outdoors and encounters relatively complex road conditions, larger vibrations are generated and further transmitted through the vehicle frame 11 to the user riding on the manned mower, bringing in a poorer experience to the user. The seat 91 of the manned mower disclosed in the present application further has a vibration damping function and is used for suppressing the vibration and road impact when the spring rebounds after vibration damping. When the manned mower travels on a rough road, although a shock absorber spring can damp the vibration from the road, the spring moves up and down, and a shock absorber is used for suppressing the spring bounce. If the shock absorber is too soft, the body bounces up and down; while a shock absorber that is too stiff brings in too much resistance, preventing the spring from working properly.

The present application further discloses the arrangement and packaging of the electronic control system of the electric mower and the electric wheeled device. The electronic control system of the manned mower generally includes elements from four functional parts, that is, a user interface part, a controller part, a system feedback part, and an output part. In the present application, the manned mower is used as a specific example. In fact, the electric mower includes, but is not limited to, the stand-on mower and the riding mower. The electric wheeled device includes, but is not limited to, the manned mower, the push snow thrower, the push mower, and the UTV.

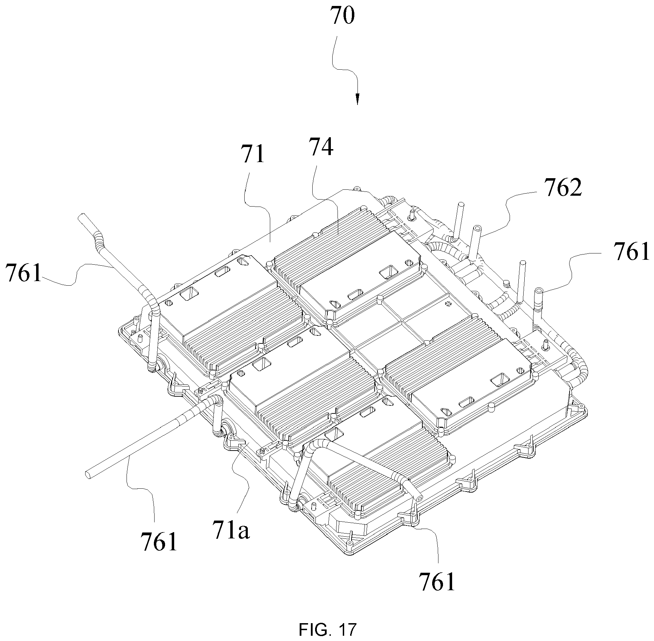

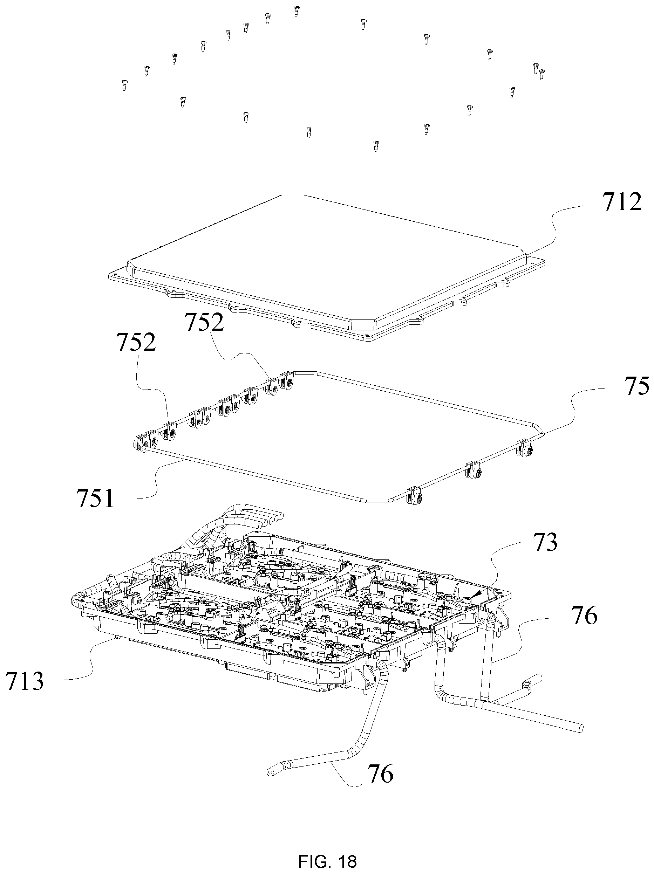

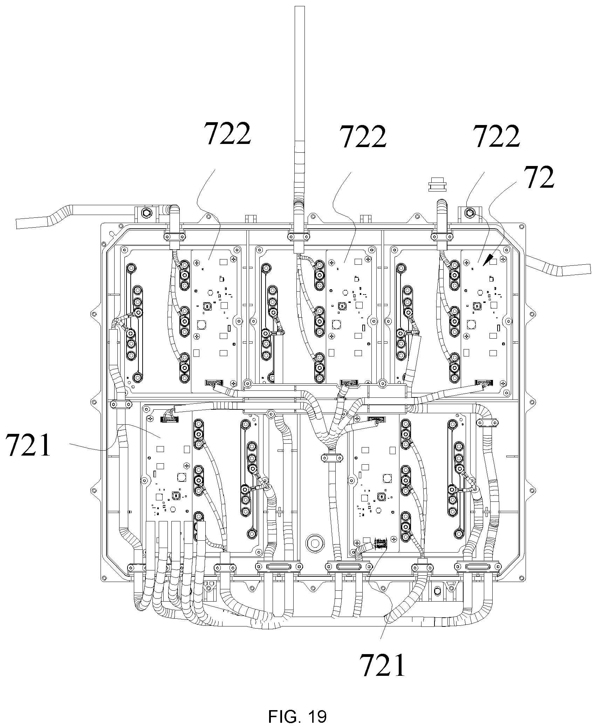

The central control assembly 70 is disposed on the lower side of the seat 91 and used as a control center to control the operation of the components of the entire manned mower that are electrically connected to the central control assembly 70. In addition, the central control assembly 70 may be positioned toward the center of the vehicle to provide further protection from incidental contact with objects that the vehicle may encounter and positioned in a manner that protects the wire harness connected to the central control assembly 70. FIG. 16 shows the central control assembly 70 having a housing 71. As shown in FIGS. 17 to 19, the housing 71 forms a sealed compartment 73 for accommodating a circuit board assembly 72. The circuit board assembly 72 may include one or more of various controllers mentioned above, such as traveling control boards 721 and mowing control boards 722 shown in FIG. 19. Two traveling control boards 721 and three mowing control boards 722 are provided. It is to be understood that the five circuit boards are independent of each other. The two traveling control boards 721 are the same, and the three mowing control boards 722 are the same. This has the advantage that when a failure occurs in the central control assembly 70, it is only necessary to open the housing 71, check and repair the traveling control boards 721 and the mowing control boards 722, and easily replace the damaged circuit board. Optionally, the housing 71 of the central control assembly 70 may be formed in various shapes and may have various structures. In some examples, the housing 71 is made of materials having high thermal conductivity and specific heat capacity, such as aluminum, zinc-aluminum, zinc-aluminum-magnesium, copper, or the like. Optionally, the material of the housing 71 is aluminum or an aluminum alloy casting. The housing 71 should have a solid structure to prevent deformation or damage when bit by an object. In other examples, the housing 71 is made of plastic material. To ensure the heat dissipation effect of the central control assembly 70 during the operation, multiple heat sinks 74 are disposed on the surface of the housing 71 to increase the surface area exposed to the ambient air. Specifically, multiple through holes for mounting the heat sinks 74 are formed on the housing 71, and a sealing structure, such as a sealing ring, is provided between the heat sink 74 and the through hole.

Specifically, the housing 71 includes a first housing 712 and a second housing 713. The circuit board assembly 72 is disposed in the accommodation space formed by the first housing 712 and the second housing 713. The central control assembly 70 further includes a sealing assembly 75 and cables 76 extending from the accommodation space. The sealing assembly 75 is used for achieving the sealing between the cables 76 and the first housing 712 or the second housing 713. At least part of the sealing assembly 75 is resiliently deformable. The cables 76 may be flexible cables.

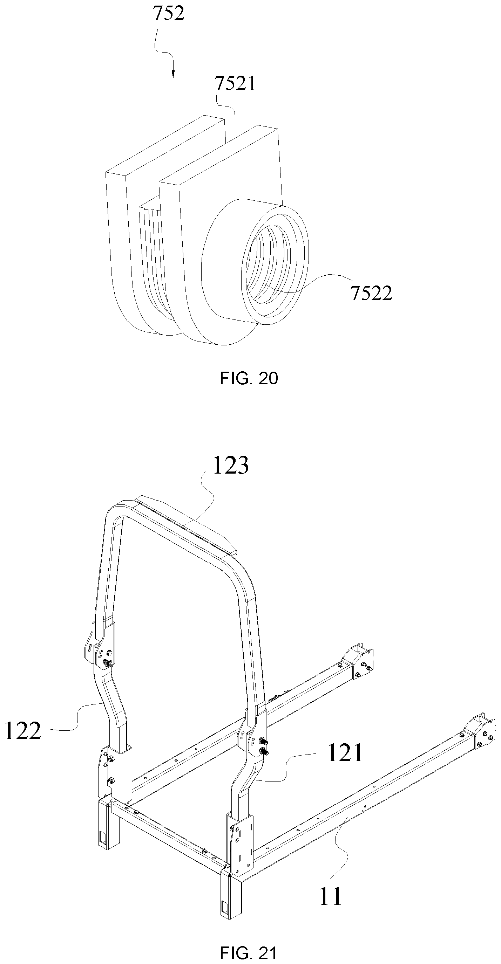

Optionally, the sealing assembly 75 includes a first sealing member 751 and second sealing members 752. The first sealing member 751 is used for achieving the sealing between the first housing 712 and the second housing 713, and the second sealing members 752 are used for achieving the sealing between the cables 76 and the second housing 713. Specifically, as shown in FIG. 20, the second sealing member 752 is formed with a groove 7521 adaptable to the first sealing member, the first sealing member 751 is disposed in the groove 7521, and the groove 7521 tightly mates with the first sealing member 752. The second sealing member 752 further includes a through hole 7522 for achieving the sealing between the cable 76 and the second housing 713. The cable 76 passes through the through hole 7522 and has an interference fit with the second sealing member 752. The first sealing member abuts against the second sealing members so that the overall sealing performance of the central control assembly 70 is ensured, and it is ensured that the waterproof performance of the central control assembly 70 reaches the IPX5 level or an even higher level. Optionally, the first sealing member 751 is a sealing ring or a foam sealing strip, and the second sealing member 752 is a wire harness plug. It is to be noted that the special feature of the second sealing members 752 disclosed in the present application is that, while the second sealing members 752 seal the cables 76, the second sealing members 752 can mate well with the first sealing member 751 to achieve the overall sealing performance of the first housing 712, the second housing 713, and the cables 76, and the structure is simple and easy to assemble.

Optionally, the first sealing member 751 and the second sealing members 752 are integrally formed.

The cables 76 include first cables 761 for controlling mowing electric motors and second cables 762 for controlling the traveling electric motors 42. The first cables 761 and the second cables 762 extend from a first side surface 71a and a second side surface 71b of the housing 71, respectively. The first side surface 71a and the second side surface 71b are opposite to each other. In this manner, the first cables 761 for controlling the mowing electric motors and the second cables 762 for controlling the traveling electric motors 42 emerge from two sides of the housing 71, respectively, thereby ensuring the shortest wiring distance between the cable outlets and the corresponding electric motors and making the structure more compact.

The manned mower disclosed in the present application further includes a brake mechanism 60 for braking the traveling wheel set 41 during travel or on a slope. Optionally, the brake mechanism 60 includes a first brake assembly for braking the second left traveling wheel 412L and a second brake assembly for braking the second right traveling wheel 412R. The operating assembly 50 further includes a brake pedal for driving the first brake assembly and the second brake assembly. By braking the brake pedal, the user can control the manned mower to slow down until the manned mower stops.

Specifically, the brake pedal 52 is connected to a drive rod disposed between the brake pedal and the first brake assembly or/and the second brake assembly and used for transmitting the braking force on the brake pedal to the first brake assembly or/and the second brake assembly. The braking process of the manned mower is as follows: the user brakes the brake pedal to drive the drive rod to move, the drive rod drives the first brake assembly to brake the second left traveling wheel 412L, and at the same time, the drive rod drives the second brake assembly to brake the second right traveling wheel 412R. Optionally, the first brake assembly and the second brake assembly include steel wire ropes so that the parking forces on the left and right sides of the vehicle are uniform and the requirements for spatial arrangement are low.

The manned mower, especially the zero turning radius (ZTR) mower, can do a full 360° tank turn and has high working efficiency. However, the manned mower is an off-road vehicle, the operating environment is complex, and the manned mower is often used in complex working environments such as slopes and depressions; due to the uneven technical levels of operators and the reduced stability of the entire vehicle during operation, rollover accidents often occur, seriously threatening the life of the driver. To reduce the loss of life and property caused by accidents, the most convenient method is to adopt passive protection, that is, to install an anti-overturn device to the vehicle that can provide a certain degree of safety protection. In this manner, a safe space can be formed under the protection of the anti-overturn device, thereby protecting the driver after the vehicle overturns.

The improvements of the anti-overturn device of the manned mower disclosed in the present application mainly lie in the fixing structure and the adjustment and flipping method such that the anti-overturn device can be effectively fixed and can be folded down when the manned mower passes through culverts or height restrictions, facilitating lowering the height of the entire vehicle for the manned mower to pass through quickly.

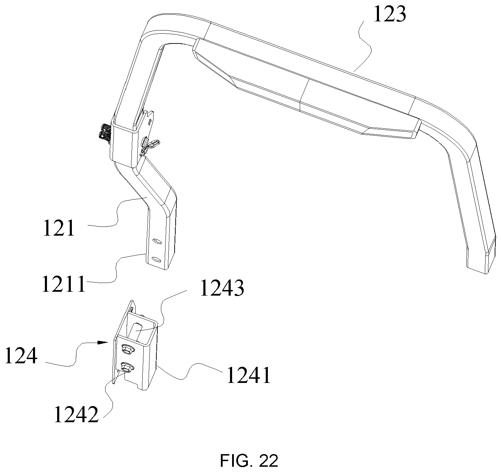

As shown in FIG. 1 and FIGS. 21 to 23, an anti-overturn device 12 is disposed near the support portion and is at least partially fixedly mounted to the vehicle frame 11. The anti-overturn device 12 is operated to have at least a first folded position and a second folded position. Optionally, the anti-overturn device 12 includes a first pillar part 121, a second pillar part 122, and a third pillar part 123. The third pillar part 123 can be folded relative to the first pillar part 121 and the second pillar part 122.

The first pillar part 121 includes a connection assembly 124 mounted to the vehicle frame 11 and a bending assembly 125 bendable relative to the vehicle frame 11. Specifically, the first pillar part 121 has a first end portion 1211 detachably mounted to the vehicle frame 11 and a second end portion 1212 spaced apart from the first end portion 1211. The first end portion 1211 is connected to the vehicle frame 11 through the connection assembly 124, and the second end portion 1212 is connected to the third pillar part 123 through the bending assembly 125.

The connection assembly 124 includes a sleeve 1241 fixedly mounted to the vehicle frame 11. The first end portion 1211 of the first pillar part 121 is disposed in the sleeve 1241 and is fixed by pressing an intermediate sleeve 1243 with a bolt 1242. In this manner, the intermediate sleeve 1243 is provided, thereby preventing the vertical pipe of the first end portion 1211 of the first pillar part 121 from being directly crushed and deformed by the bolt 1242. When the anti-overturn device 12 needs to be removed, the user only needs to loosen the tightening nut on the outside to quickly disassemble and transport the anti-overturn device 12.

The bending assembly 125 includes a flip connector 1251, a rotary pin 1252, and a positioning pin 1253. The second end portion 1212 of the first pillar part 121 is formed with multiple positioning holes 1253a adapted to the positioning pin 1253, and the user selects different positioning holes 1253a according to the bending angle requirements.

The above uses the first pillar part 121 as an example to describe the fixing method of the first pillar part 121 and the vehicle frame and the connection relationship between the first pillar part 121 and the third pillar part 123. It is to be understood that the installation form of the second pillar part 122 is the same as that of the first pillar part 121, and the description is not repeated in the present application.

The anti-overturn device 12 in the present application is provided with three states, that is, a working state, a first folded state, and a second folded state. The folding angles in the first folded state and the second folded state are different. In this manner, different folded positions of the anti-overturn device 2 are adjusted according to different passing scenarios. The third pillar part 123 is flipped through the rotary pin 1252. After the third pillar part 123 is flipped to a set angle, locking is achieved by inserting and pulling out the positioning pin 1253. In some examples, shock absorbing elastic pieces or shock absorbing sponges are provided between the third pillar part 123, the first pillar part 121, and the second pillar part 122 and used for reducing the vibration of the anti-overturn device 12 during the driving process of the vehicle.

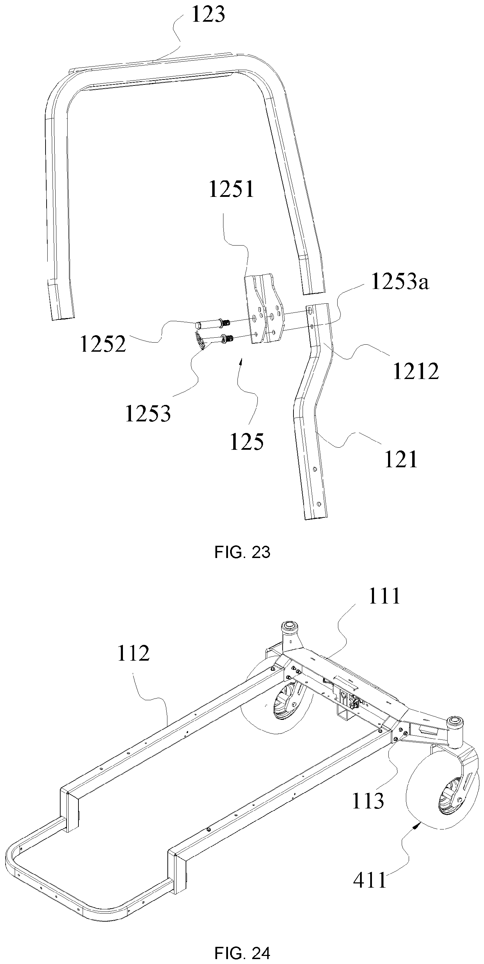

As shown in FIG. 24, the vehicle frame 11 includes a front vehicle frame 111 and a rear vehicle frame 112 that are detachably connected. The first traveling wheels 411 are mounted to the front vehicle frame 111, and the second traveling wheels 412 are mounted to the rear vehicle frame 112. Optionally, the front vehicle frame 111 and the rear vehicle frame 112 are mounted and fixed through connecting bolts 113. The first traveling wheels 411 are separately mounted on the front vehicle frame 111, and the power supply assembly, the central control assembly, and the like are mounted on the rear vehicle frame 112. When cutting decks of different specifications (such as 48 inches, 52 inches, 54 inches, and 60 inches) need to be replaced to satisfy the requirements of different users or working conditions, by using the front vehicle frames 111 adapted to the cutting decks, the user may change the wheelbase of the manned mower to adapt to cutting decks of different dimensions. The entire front vehicle frame 111 disclosed in the present application adopts an I-beam structure welded with steel plates. Binding holes are designed on two sides of the front axle shaft tube, and a towing hole is designed in the middle to facilitate the attachment of front-mounted attachments such as a snowplow.

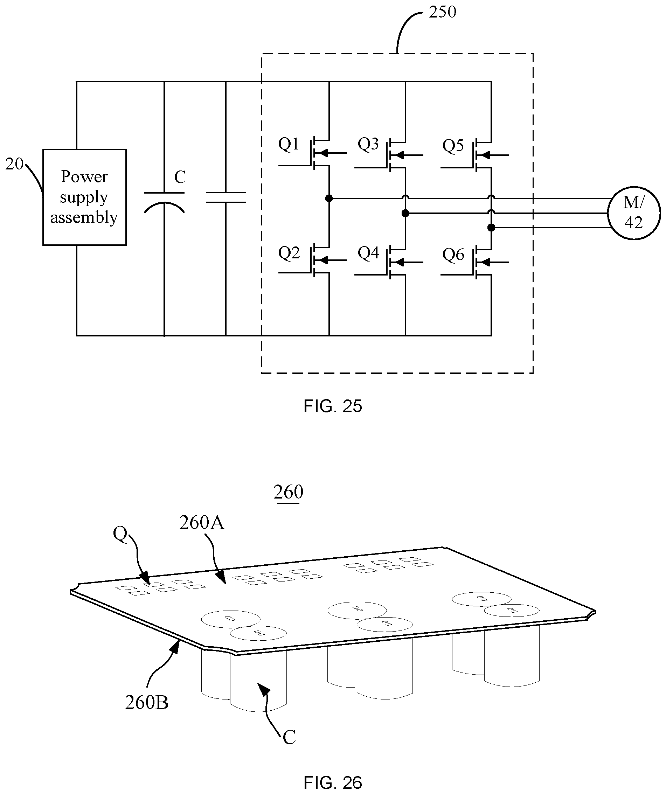

The manned mower of the present application has a relatively large power requirement for the entire vehicle, the power of the traveling controller and the cutting deck controller is greater than that of the existing manned mowers, and the overcurrent capacity requirements for the controllers are greatly increased. Based on the preceding features, the present application provides a manned mower and is suitable for the high-power and high-current manned mower. As shown in FIG. 25, the manned mower of the present application includes the traveling wheel set 41 (shown in FIG. 2) driven by the traveling electric motor 42; a mowing element driven by a mowing electric motor M; the power supply assembly 20 for supplying power to the traveling electric motor 42 and the mowing electric motor M; and a driver circuit 250 for outputting a drive signal to drive the traveling electric motor 42 or the mowing electric motor M to operate. The driver circuit 250 includes multiple power transistors (for example, Q1, Q2, Q3, Q4, Q5, and Q6), and the power transistors change the conduction states according to the control signals outputted by the controller, thereby changing the voltage and/or current states loaded by the power supply assembly 20 to the windings of the traveling electric motor 42 or the mowing electric motor M and driving the traveling electric motor 42 or the mowing electric motor M to operate.

As shown in FIG. 25, the manned mower of the present application further includes multiple capacitors C. In the hardware circuit, the capacitor C may be directly connected in parallel to the power bus or directly connected between the upper and lower transistors of the driver circuit 250. The capacitor C integrated into the battery pack 21 may be a supercapacitor for smoothing the power supply and reducing the noise and ripple in the power supply. Optionally, the capacitance of at least one of the multiple capacitors is 680 $\mu$F, and the operating voltage of the capacitor is less than or equal to 100 V.

As shown in FIG. 26, the manned mower of the present application further includes a circuit substrate 260 including a first surface 260A and a second surface 260B opposite to each other. The multiple power transistors Q are arranged on the first surface 260A, and the multiple capacitors C are arranged on the second surface 260B. The first surface 260A is a printed circuit board, and the second surface 260B is an aluminum substrate. In this example, the aluminum substrate is not provided with a printed circuit layer, the aluminum substrate is only used for fixing the capacitors, and the aluminum substrate and the capacitors are insulated from each other. The circuits of the capacitors are integrated on the printed circuit board of the first surface 260A. Therefore, in the present application, multiple power transistors and capacitors are mounted on two sides of a single circuit substrate so that the problem of high production costs caused by the existing control board structure using two printed circuit boards on which the power transistors and capacitors are integrated, respectively is solved, thereby simplifying the control board structure, saving the costs, and achieving high current and high power driving.

Optionally, the printed circuit board is provided with a direct current (DC) bus wire and a power transistor wire. The aluminum substrate is provided with first through holes, and the capacitor is electrically connected to the DC bus wire or the power transistor wire via the first through hole. The power transistors, the capacitors C, the DC bus wire, and the power transistor wire are interconnected according to the circuit structure of the manned mower (referring to the driver circuit shown in FIG. 25).

In this example, the manned mower further includes insulators. The insulator is disposed between the capacitor and the aluminum substrate to insulate the capacitor from the aluminum substrate. In the present application, the insulator includes, but is not limited to, an adhesive dispensing insulation pad and/or an insulation sleeve. The insulation sleeve is disposed in the first through hole of the aluminum substrate. The capacitor is fixedly mounted on the aluminum substrate through the adhesive dispensing insulation pad, and the capacitors and the power transistors are mounted on different sides of the circuit substrate 260.

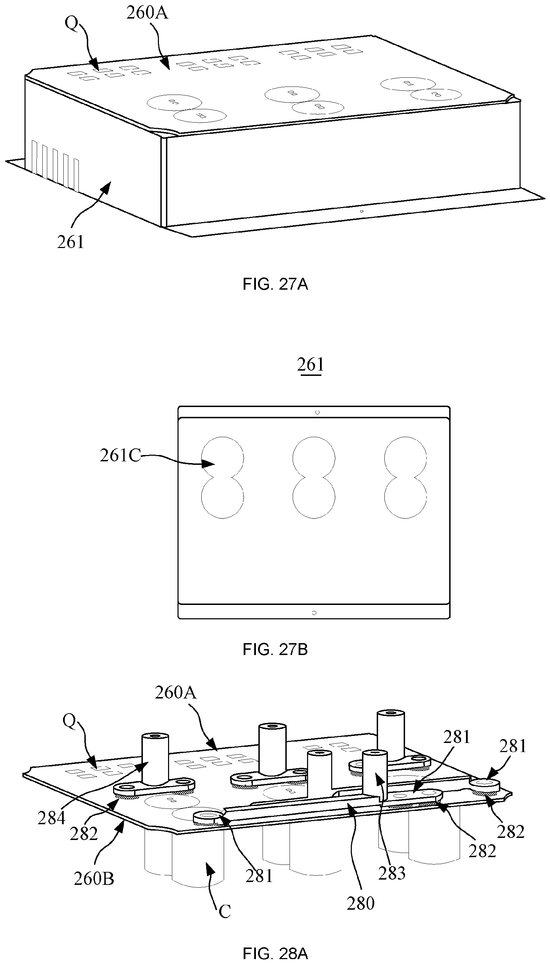

As shown in FIGS. 27A and 27B, the manned mower further includes a heat sink block 261 disposed on a side of the circuit substrate 260 where the multiple capacitors C are mounted. The heat sink block 261 is formed with multiple accommodation spaces 261C. The multiple capacitors C are at least partially disposed in the accommodation spaces 261C. In this example, the accommodation space 261C may be a circular groove in the heat sink block, the inner diameter of the groove matches the outer diameter of the capacitor, and the depth of the groove may be adjusted according to the height of the capacitor C. By digging holes in the heat sink block 261, the heat dissipation performance is ensured and the capacitors are prevented from being heated and catching fire. Optionally, heat dissipation teeth are provided on the surface of the heat sink block 261 to increase the heat dissipation area of the heat sink block.

In some examples, one or more glue filling holes and exhaust holes are formed on the circuit substrate 260, and the accommodation spaces 261C for accommodating the capacitors C are filled with glue. In this manner, on the one hand, the capacitors can be fixed, and on the other hand, the heat of the capacitors can be dissipated. The diameter of the glue filling hole is greater than or equal to 3 mm, and the diameter of the exhaust hole is greater than or equal to 1.5 mm. Optionally, the preceding glue filling hole and exhaust hole are disposed on the circuit substrate 260 near the capacitor C.

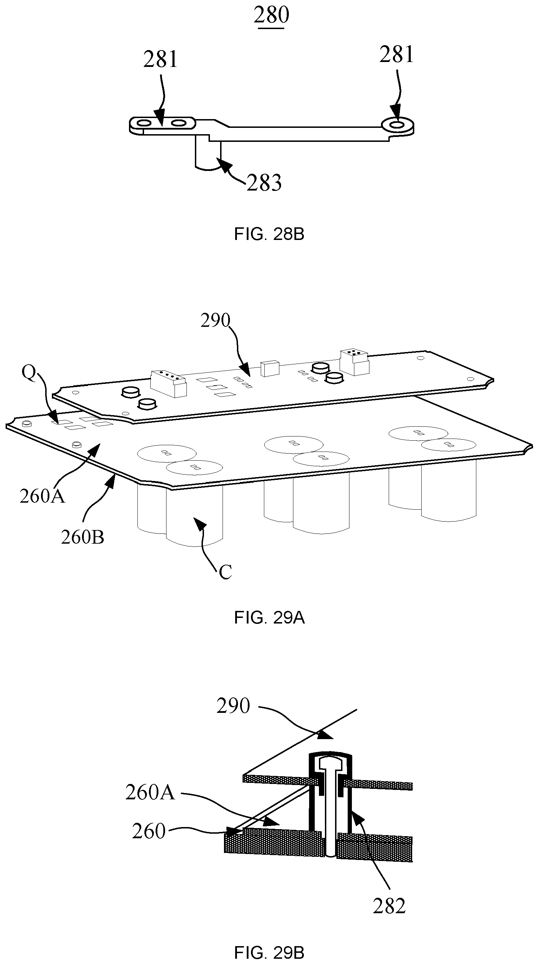

Referring to FIGS. 28A and 28B, the manned mower further includes a power bracket 280 disposed on the first surface 260A (that is, the printed circuit board) or the second surface 260B (that is, the aluminum substrate) of the circuit substrate 260. When the power bracket 280 is disposed on the second surface 260B of the circuit substrate 260, the power bracket 280 and the aluminum substrate are insulated from each other. When the power bracket 280 is disposed on the first surface 260A of the circuit substrate 260, the printed circuit board is provided with a power wire, and the power bracket 280 is electrically connected to the power wire. In this example, the power wire includes a positive power wire and a negative power wire, and the lengths of the positive power wire and the negative power wire are basically equal. The positive power wire is used for connecting the positive terminal of the power supply assembly 20, and the negative power wire is used for connecting the negative terminal of the power supply assembly 20. The power supply assembly 20 is used for supplying power to the control module of the system. By setting the positive power wire and the negative power wire to be of equal length, the power supply quality of the system is improved and the electromagnetic interference of the control module is reduced.

As shown in FIGS. 28A and 28B, the power bracket 280 is an aluminum alloy structural member, and mounting via regions are provided on the lower surface of the power bracket 280. The mounting via regions protrude from the structural body to form bosses 281, thereby ensuring the contact reliability. The power bracket 280 is welded on the printed circuit board through metal rings 282. Through screws, the power bracket 280 presses the lower surface of the bosses 281 and the upper surface of the metal rings 282 into contact, thereby achieving large current conduction and heat dissipation.

Referring to FIGS. 28A and 28B, the power bracket 280 further includes a copper busbar (not shown), a power binding post 283, and a screw (not shown). The power binding post 283 is mounted and fastened to the copper busbar by the screw, and the copper busbar is welded to the aluminum substrate so that large current carrying and heat dissipation are achieved.

As shown in FIG. 28A, the manned mower further includes an independent binding post 284 (for example, a three-phase power transistor binding post) fixed to the first surface 260A or the second surface 260B of the circuit substrate 260 through the metal ring 282. In this example, the binding post 284 may be formed by an aluminum alloy structural member. The metal ring is independently formed or integrally formed with the binding post 284. The inner and outer diameters of the metal ring match the dimensions of the binding post. The metal rings are provided so that the flatness of the wiring terminals is improved.

Referring to FIGS. 29A and 29B, the manned mower further includes a main control board 290 disposed on a side of the first surface 260A of the circuit substrate 260. The main control board 290 and the circuit substrate 260 are connected by fasteners to form a control assembly. As shown in FIG. 1, the control assembly may be disposed below the seat 91 of the manned mower. The fasteners may be fastening bolts or screws. In this example, the metal rings 282 may be disposed between the main control board 290 and the circuit substrate 260, and the fastener passes through the mounting hole of the main control board 290 and the metal ring 282 in sequence and then is fixedly connected to the circuit substrate 260. In the present application, the main control board 290 is connected to the circuit substrate 260 through a board-to-board connector (for example, a pin header or a female header). By providing the metal rings 282 and the board-to-board connector, the main control board 290 and the circuit substrate 260 are connected and fixed, and the overcurrent capacity is strong.

As shown in FIG. 3, the power supply assembly 20 of the present application includes at least one battery pack 21. The nominal voltage of the at least one battery pack 21 is greater than or equal to 40 V and less than or equal to 60 V. The total energy of the power supply assembly 20 is greater than or equal to 2 kW·h. The at least one battery pack 21 is detachably connected to the connectors 22, and the connectors 22 are detachably mounted to the outdoor traveling device 100 so that the at least one battery pack 21 can be taken out to adapt to other electrical devices.

Based on the same concept, the present application further provides the outdoor traveling device 100. As shown in FIGS. 2, 12, 25, and 26, the outdoor traveling device 100 of the present application includes the traveling wheel set 41 driven by the traveling electric motors 42; the power supply assembly 20 for supplying power to the traveling electric motors 42; the driver circuit 250 outputting drive signals to drive the traveling electric motors 42 to operate, where the driver circuit 250 includes multiple power transistors (Q1 to Q6); and the circuit substrate 260 including the first surface 260A on which multiple power transistors are arranged and the second surface 260B opposite to the first surface 260A, where the second surface 260B is configured to be an aluminum substrate on which multiple capacitors are mounted, and insulators are disposed between the multiple capacitors and the aluminum substrate. In this example, the first surface 260A is a printed circuit board; the printed circuit board is provided with a DC bus wire and a power transistor wire; the aluminum substrate is provided with first through holes; the capacitor is electrically connected to the DC bus wire or the power transistor wire through the first through hole; and the capacitance of at least one capacitor is 680 μf, and the operating voltage of at least one capacitor is less than or equal to 100 V.

As shown in FIGS. 28A and 28B, the outdoor traveling device 100 further includes the power bracket 280 disposed on the first surface 260A or the second surface 260B of the circuit substrate 260; the second surface 260B is provided with a power wire, and the power wire is electrically connected to the power bracket 280; and the power wire 280 includes a positive power wire and a negative power wire, and the lengths of the positive power wire and the negative power wire are basically equal. The positive power wire is used for connecting the positive terminal of the power supply assembly 20, and the negative power wire is used for connecting the negative terminal of the power supply assembly 20. The power supply assembly 20 is used for supplying power to the control module of the system. By setting the positive power wire and the negative power wire to be of equal length, the power supply quality of the system is improved and the electromagnetic interference of the control module is reduced.

As shown in FIG. 28A, the outdoor traveling device 100 further includes an independent binding post 284 (for example, a three-phase power transistor binding post) fixed to the first surface 260A or the second surface 260B of the circuit substrate 260 through the metal ring 282. In this example, the binding post 284 may be formed by an aluminum alloy structural member. The metal ring is independently formed or integrally formed with the binding post 284. The inner and outer diameters of the metal ring match the dimensions of the binding post.

As shown in FIG. 4, the outdoor traveling device 100 includes, but is not limited to, the manned mower (such as the riding mower 100b and the stand-on mower 100d), the UTV 100a, or the snow thrower (such as the push snow thrower 100c).

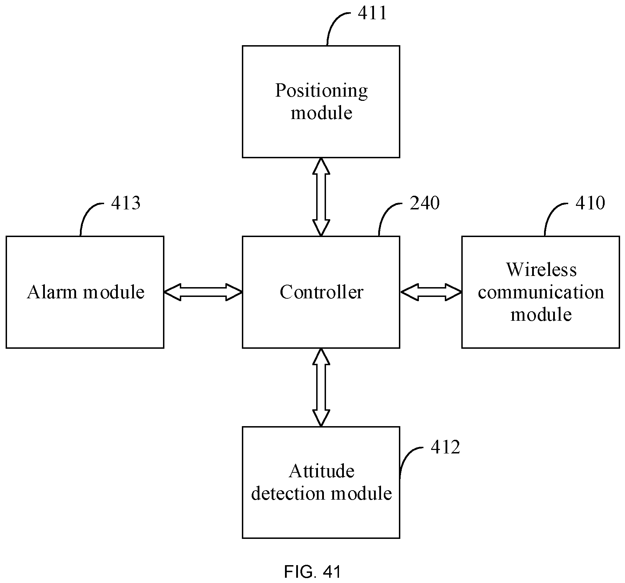

The present application further provides the manned mower so that the method for detecting the rotor position of the electric motor is improved, thereby solving the problem of electric motor shutdown caused by the inability to accurately acquire the rotor position under a heavy load. As shown in FIGS. 3, 8, 12, and 25, the manned mower of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; the power supply assembly 20 including at least one battery pack 21; the driver circuit 250 electrically connected to the mowing electric motor M and used for the at least one battery pack 21 to supply power to the mowing electric motor M; and the controller 240 (as shown in FIG. 41) configured to apply the drive signal to the driver circuit 250 to control the operation of at least the mowing electric motor M.

The controller of the present application is configured to receive a first electrical parameter related to the current of the mowing electric motor M and when the first electrical parameter satisfies a first preset condition, limit the first electrical parameter within a preset range. In this example, the first electrical parameter may be the bus current of the mowing electric motor M. The first preset condition may be a threshold condition related to the current when the mowing electric motor M operates in a heavy load state. The preset range is set in association with the first preset condition. For example, the first preset condition may be that the bus current is greater than 150A, and the preset range may be that the bus current is limited to 150A. When the first electrical parameter is limited within the preset range, the controller is further configured to selectively use a first method or a second method to determine the rotor position of the mowing electric motor M so that the mowing electric motor M does not stop when the first electrical parameter is within the preset range. The first method may be to use a high-frequency injection method to obtain the rotor position, and the second method may be to use a flux observer to detect the rotor position.

Optionally, the controller is configured to receive a second electrical parameter related to the rotational speed of the mowing electric motor M and according to the second electrical parameter, selectively use the first method or the second method to determine the rotor position of the mowing electric motor M. The second electrical parameter may be the rotational speed of the mowing electric motor M. When the first method or the second method is selectively used according to the second electrical parameter to determine the rotor position of the mowing electric motor M, the controller is configured to, when the second electrical parameter satisfies a second preset condition, use the first method to determine the rotor position of the mowing electric motor M and when the second electrical parameter satisfies a third preset condition, use the second method to determine the rotor position of the mowing electric motor M. The second preset condition includes that the duration is less than a preset time threshold (for example, 5s) and the rotational speed of the mowing electric motor M is less than a preset lower limit threshold (for example, 8% of the rated rotational speed of the mowing electric motor M); and the third preset condition includes a preset upper limit threshold related to the rotational speed of the mowing electric motor M (for example, 12% of the rated rotational speed of the mowing electric motor M). The preset upper limit threshold is greater than the preset lower limit threshold.

Specifically, the rotor position detection method (for example, the first method or the second method) may be switched according to the rotational speed and bus current of the mowing electric motor M so that it is ensured that the blade electric motor does not stop with the load and continuing driving. During the operation of the mowing electric motor M, when the first electrical parameter satisfies the first preset condition (for example, the heavy-load bus current is greater than 150 A), the controller limits the bus current to 150 A and monitors the rotational speed of the mowing electric motor M in real time. When the rotational speed of the electric motor is less than a first preset rotational speed (for example, 12% of the rated rotational speed of the mowing electric motor M) and the rotational speed of the electric motor is greater than or equal to a second preset rotational speed (for example, 8% of the rated rotational speed of the mowing electric motor M), high-frequency pulses are injected, but the second method (for example, the flux observer) is still used to detect the rotor angle of the electric motor. When the rotational speed of the electric motor is less than the second preset rotational speed (for example, 8% of the rated rotational speed of the mowing electric motor M), the rotor angle of the electric motor is obtained by switching to the first method (for example, the high-frequency injection method), and after the first method maintains the preset time threshold (for example, 5s) (to avoid switching back and forth between the two rotor position acquisition methods due to load fluctuations), whether the rotational speed of the electric motor can satisfy the stage of switching to the method of detecting the rotor angle according to the flux observer is determined; if so, the preceding switching strategy is re-executed. The rotor position detection method is switched according to the rotational speed and current so that the problem of electric motor shutdown caused by the inability to accurately acquire the rotor position during heavy-load operation is solved, it is ensured that the mowing electric motor operates under a heavy load without stopping, and the operating experience of the user is improved.

Optionally, the controller is further configured to, when the mowing electric motor M starts, determine the rotor position of the mowing electric motor M using the first method (such as the high-frequency injection method). When the mowing electric motor M starts, the controller is further configured to receive the second electrical parameter related to the rotational speed of the mowing electric motor M, determine, according to the second electrical parameter, whether to perform rotor position detection method switching, and when the rotor position detection method switching is not performed, control the mowing electric motor M to stop. The second electrical parameter may be the real-time rotational speed of the mowing electric motor M. Specifically, when the mowing electric motor M starts, the rotor position is acquired using the first method (for example, the high-frequency injection method), and the rotational speed of the mowing electric motor M is monitored in real time. When the rotational speed of the electric motor is greater than 10% of the rated rotational speed, the rotor angle and speed of the electric motor are detected by switching to the second method (such as the flux observer). If the rotational speed does not satisfy the switching condition, the machine stops after operating for 15s.

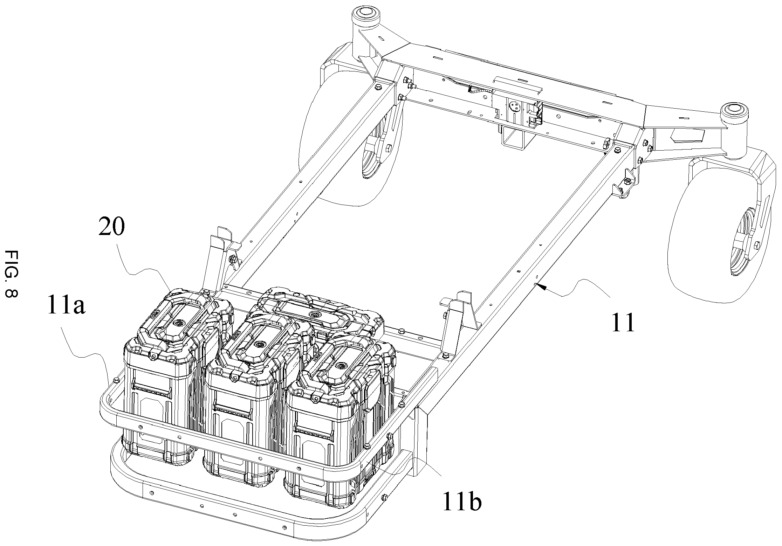

The present application further provides a manned mower control method so that by using the rotor position detection methods described in the preceding example, the mower operates under a load without stopping. As shown in FIGS. 8 and 12, the manned mower includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; and the mowing element driven by the mowing electric motor M.

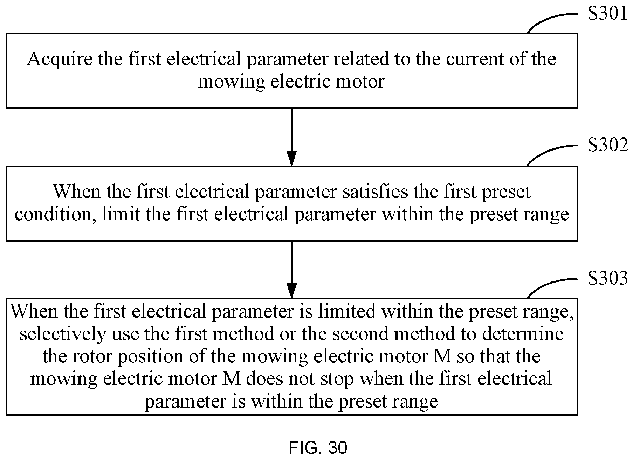

As shown in FIG. 30, during the operation of the mowing electric motor M, the manned mower control method includes the steps below.

In S301, the first electrical parameter related to the current of the mowing electric motor M is acquired. The first electrical parameter may be the bus current.

In S302, when the first electrical parameter satisfies the first preset condition, the first electrical parameter is limited within the preset range. The first preset condition may be a threshold condition related to the current when the mowing electric motor M operates in a heavy load state. The preset range is set in association with the first preset condition. For example, the first preset condition may be that the bus current is greater than 150 A, and the preset range may be that the bus current is limited to 150 A.

In S303, when the first electrical parameter is limited within the preset range, the first method or the second method is selectively used to determine the rotor position of the mowing electric motor M so that the mowing electric motor M does not stop when the first electrical parameter is within the preset range. The first method may be to use a high-frequency injection method to obtain the rotor position, and the second method may be to use a flux observer to detect the rotor position.

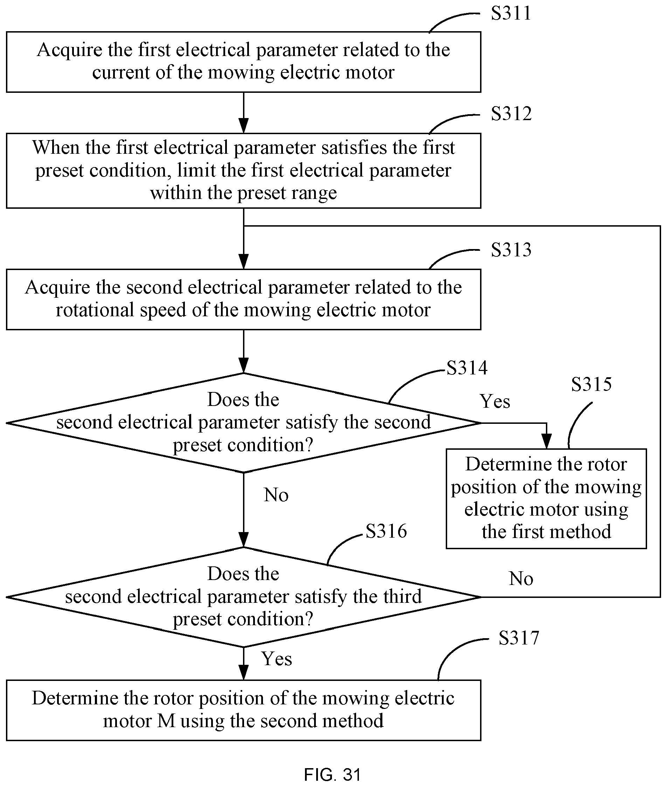

As shown in FIG. 31, in the manned mower control method of the present application, the step of selectively using the first method or the second method to determine the rotor position of the mowing electric motor M includes the steps below.

In S311, the first electrical parameter related to the current of the mowing electric motor M is acquired.

In S312, when the first electrical parameter satisfies the first preset condition, the first electrical parameter is limited within the preset range.

In S313, the second electrical parameter related to the rotational speed of the mowing electric motor M is acquired.

After the second electrical parameter is obtained, the step of selectively using the first method or the second method according to the second electrical parameter to determine the rotor position of the mowing electric motor M includes the steps below.

In S314, whether the second electrical parameter satisfies the second preset condition is determined. The second preset condition includes that the duration is less than the preset time threshold (for example, 5s) and the rotational speed of the mowing electric motor M is less than the preset lower limit threshold (for example, 8% of the rated rotational speed of the mowing electric motor M).

If the second electrical parameter satisfies the second preset condition, step S315 is performed; and if the second electrical parameter does not satisfy the second preset condition, step S316 is performed.

In S315, the rotor position of the mowing electric motor M is determined using the first method.

In S316, whether the second electrical parameter satisfies the third preset condition is determined. The third preset condition includes the preset upper limit threshold related to the rotational speed of the mowing electric motor M (for example, 12% of the rated rotational speed of the mowing electric motor M), where the preset upper limit threshold is greater than the preset lower limit threshold.

If the second electrical parameter satisfies the third preset condition, step S317 is performed; and if the second electrical parameter does not satisfy the third preset condition, step S313 is performed.

In S317, the rotor position of the mowing electric motor M is determined using the second method.

Optionally, the manned mower control method of the present application further includes: when the mowing electric motor M starts, determining the rotor position of the mowing electric motor M using the first method. When the mowing electric motor M starts, the manned mower control method further includes: acquiring the second electrical parameter related to the rotational speed of the mowing electric motor M, determining, according to the second electrical parameter, whether to perform rotor position detection method switching, and when the rotor position detection method switching is not performed, controlling the mowing electric motor M to stop.

Based on the same concept, the present application further provides the outdoor traveling device 100, and the rotor position detection methods recorded in the preceding example are adopted so that the mower operates under a load without stopping. The outdoor traveling device 100 has the same functional modules and technical effects as the preceding manned mower. As shown in FIGS. 3, 8, 12, and 25, the outdoor traveling device 100 of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; and the controller (not shown) configured to apply the drive signal to the driver circuit 250 to control the operation of the mowing electric motor M. The controller is configured to receive and limit the first electrical parameter related to the current of the mowing electric motor M, receive the second electrical parameter related to the rotational speed of the mowing electric motor M during the limitation period, and according to the second electrical parameter, selectively use the first method or the second method to determine the rotor position of the mowing electric motor M.

Optionally, the controller is configured to receive a second electrical parameter related to the rotational speed of the mowing electric motor M and according to the second electrical parameter, selectively use the first method or the second method to determine the rotor position of the mowing electric motor M.

Optionally, the controller is configured to, when the second electrical parameter satisfies a second preset condition, use the first method to determine the rotor position of the mowing electric motor M; and when the second electrical parameter satisfies a third preset condition, use the second method to determine the rotor position of the mowing electric motor M, where the second preset condition includes a preset time threshold and a preset lower limit threshold related to the rotational speed of the mowing electric motor M, and the third preset condition includes a preset upper limit threshold related to the rotational speed of the mowing electric motor M, where the preset upper limit threshold is greater than the preset lower limit threshold.

Optionally, the controller is further configured to, when the mowing electric motor M starts, determine the rotor position of the mowing electric motor M using the first method.

Optionally, when the mowing electric motor M starts, the controller is further configured to receive the second electrical parameter related to the rotational speed of the mowing electric motor M, determine, according to the second electrical parameter, whether to perform rotor position detection method switching, and when the rotor position detection method switching is not performed, control the mowing electric motor M to stop.

As shown in FIGS. 1 and 2, the manned mower of the present application may be provided with left and right operating lever assemblies 51, and the steering and straight-moving speed of the vehicle may be controlled according to the tilt angles of the left and right operating lever assemblies 51. Due to hardware inconsistency or other error factors, the problem that the vehicle cannot travel in a straight line in the case where the two operating rod assemblies 51 are at the same position exists. Based on this, the present application provides the manned mower, and the line in which the manned mower travels can be corrected manually so that the manned mower can travel in a straight line.

In this example, the traveling wheel set 41 includes left traveling wheels (referring to the first left traveling wheel 411L and the second left traveling wheel 412L shown in FIG. 12) and right traveling wheels (referring to the first right traveling wheel 411R and the second right traveling wheel 412R shown in FIG. 12); and drive motors including a left drive motor for driving the left traveling wheels and a right drive motor for driving the right traveling wheels. The manned mower further includes a left operating control device and a right operating control device that can be grasped by the user (referring to the left and right operating lever assemblies 51 shown in FIGS. 1 and 2); and the left drive motor and the right drive motor are independently controlled by operating the corresponding left operating control device and the corresponding right operating control device. The manned mower of the present application further includes the controller configured to, in response to a request received via a user interface, control the manned mower to enter a calibration mode (that is, a manual deviation correction mode). The manual deviation correction mode needs to be triggered and started by the user when the manned mower is in a special state (the left operating control device and the right operating control device are in the same state and the manned mower cannot travel in a straight line). The user interface may be a network interface accessed via wired or wireless communication or a human-computer interaction interface triggered through user operation.

In the calibration mode, the controller is configured to adjust the correspondence between the relevant parameters of the left operating control device and the left drive motor or the correspondence between the relevant parameters of the right operating control device and the right drive motor based on the signals inputted by the user so that the left traveling wheels and the right traveling wheels have the same rotational speed when the left operating control device and the right operating control device are in the same state. The signals inputted by the user include, but are not limited to, a traveling speed given value of the left traveling wheels, a traveling speed given value of the right traveling wheels, a tilt angle of the left operating lever, a tilt angle of the right operating lever, or other types of signals, and the signals may be used for adjusting the correspondences between the relevant parameters of the left and right operating control devices and the drive motors. The relevant parameters of the left drive motor include, but are not limited to, the rotational speed of the left drive motor. The relevant parameters of the right drive motor include, but are not limited to, the rotational speed of the right drive motor. In the example of the present application, the correspondence between the relevant parameters of the left operating control device and the left drive motor may be adjusted through the rotational speed correction coefficient K. The correspondences between the relevant parameters of the operating control devices and the drive motors are adjusted so that the rotational speeds of the left traveling wheels and the right traveling wheels when the left operating control device and the right operating control device are in the same state are ensured to be the same, and the problem that the manned mower cannot travel in a straight line in the case where the two operating lever assemblies 51 are at the same position due to hardware inconsistency or other error factors is solved, which is conducive to improving the driving experience of the user and the reliability of the straight-driving mower.

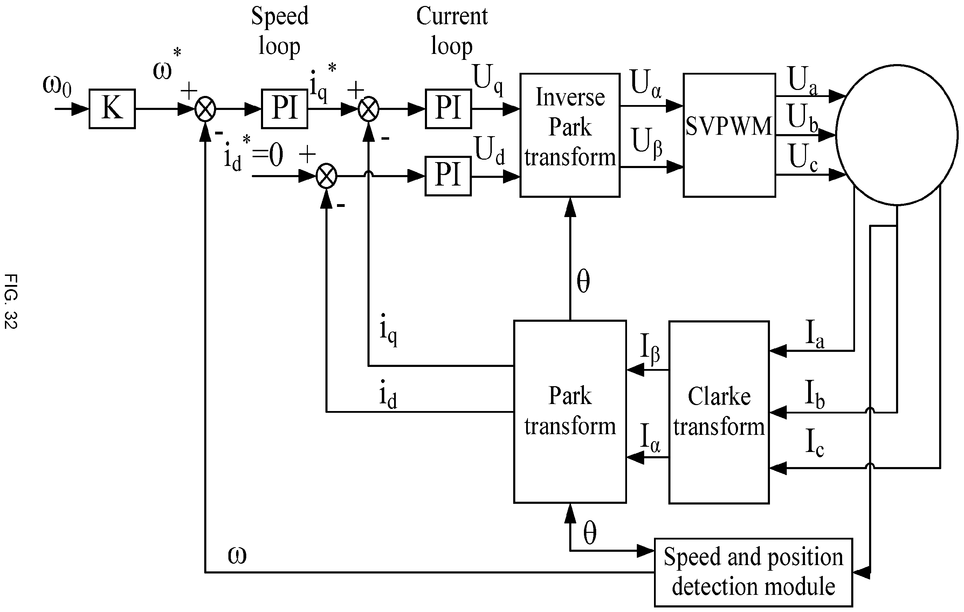

As shown in FIG. 32, the operation of the left drive motor and the right drive motor may be controlled in the field-oriented control (FOC) mode. The FOC mode includes a current loop and a speed loop. Specifically, the controller is configured to obtain the three-phase currents (for example, $I_a$, $I_b$, and $I_c$) of the left drive motor and the right drive motor in a three-phase stationary coordinate system (the current vectors of two phases of the three-phase coil may be first sampled, and the current vector of the last phase may be calculated through the Kirchhoff's current law). Then, after the Clarke transform, two orthogonal time-varying current vectors $I_\alpha$ and $I_\beta$ may be obtained. After the Park transform, two-phase DC, that is, q-axis current $i_q$ and d-axis current $i_d$ may be obtained. The q-axis current $i_q$ and the d-axis current $i_d$ are perpendicular to each other. Decoupling is performed based on the actual current of the left drive motor and the right drive motor so that q-axis target current $i_q^*$ and d-axis target current $i_d^*$ are obtained. The proportional-integral (PI) regulation method is used to adjust the deviation between the q-axis current $i_q$ and the q-axis target current $i_q^*$ and the deviation between the d-axis current $i_d$ and the d-axis target current $i_d^*$, and the voltage vectors, that is, the q-axis target voltage $U_q$ and the d-axis target voltage $U_d$ are outputted. Further, the voltage vectors obtained above are inversely transformed to a two-phase stationary coordinate system through the inverse Park transform so that two-phase DC voltages $U_\alpha$ and $U_\beta$ are obtained. Then, two-phase alternating current (AC) voltages are converted into three-phase AC voltage ($U_a$, $U_b$, and $U_c$) through space vector pulse-width modulation (PWM) technology. The three-phase AC voltages are the target voltages applied to the left drive motor and the right drive motor. The controller may generate PWM signals according to the acquired target voltages and control the on-off states of the switching elements of the driver circuit so that the left drive motor and the right drive motor operate according to the set control mode. The set control mode may include a comfort mode, a sports mode, and a normal mode. In this example, a PI controller is integrated, and the PI controller sets a proportional term P and an integral term I. The proportional term P of the PI controller may be adjusted according to the set control mode.

As shown in FIG. 32, the controller of the present application is further configured to, in the rotational speed loop, acquire a rotational speed feedback value $\omega$ and a rotor angle feedback $\theta$ using a speed and position detection module and adjust the difference between the rotational speed feedback value $\omega$ and a rotational speed given value $\omega^*$ in the PI adjustment method. The controller of the present application is further configured to use the rotational speed correction coefficient K to correct the rotational speed given value $\omega_0$ of the speed loop.

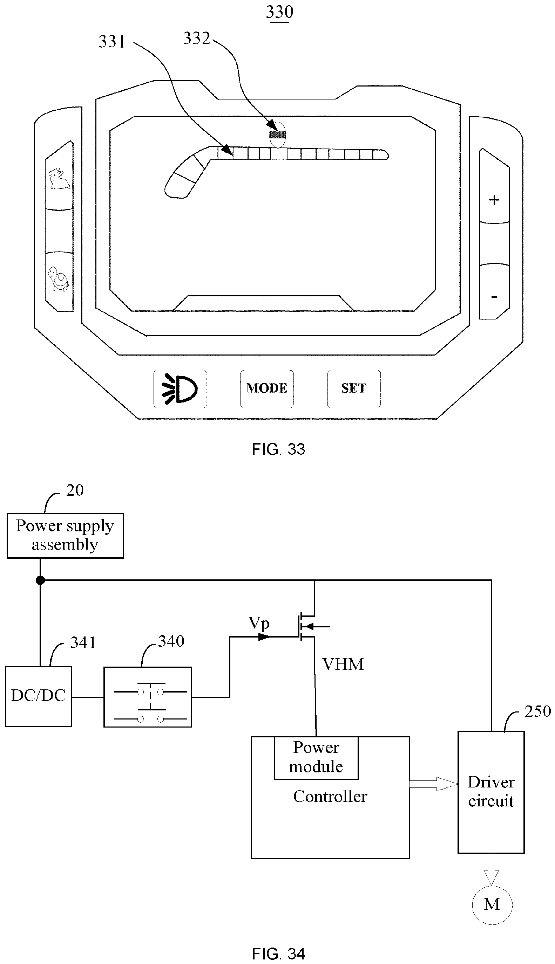

As shown in FIG. 33, the manned mower of the present application further includes a display device 330 (for example, a liquid-crystal display (LCD)). In the calibration mode, the display device 330 is configured to display the rotational speed correction coefficient K of the left and right traveling wheels using a preset graphic. Optionally, the preset graphic includes a power bar 331 for displaying power and a white icon 332 for indicating a left-right deviation state. The display device further includes preset deviation correction buttons (such as "turtle" and "rabbit" buttons) for adjusting the icon position and function buttons for adjusting the manual deviation correction mode, such as an illumination button, a mode button MODE, and a set button SET.

Optionally, the condition for entering the manual deviation correction mode includes, but is not limited to: in the condition where the display device displays only the power interface, pressing and holding the mode button MODE and the set button SET at the same time for a preset period (for example, 3s) to make the display device enter the display interface of the manual deviation correction mode.

As shown in FIG. 33, in the interface of the manual deviation correction mode, the display device of the present application is configured to display one power bar 331, where the power bar 331 may be a rectangular bar with uniform width or a bar with gradient width. One flashing white icon 332 is displayed in a small grid on the power bar 331. The position of the white icon 332 determines the speed correction coefficient K between the left and right traveling wheels. The position of the white icon 332 on the power bar 331 may be adjusted by using the preset deviation correction buttons (such as the "turtle" and "rabbit" buttons) on the left side of the display interface. If the white icon 332 is in the middle state, it means that tilt does not exist between the left and right traveling wheels, and it is ensured that the mower travels in a straight line without the need to perform deviation correction. If the left operating control device and the right operating control device are in the same state (for example, the tilting positions of the left and right operating lever assemblies 51 are the same), the vehicle deviates to the left, indicating that the wheel speed of the right traveling wheels is fast, and the "rabbit"-shaped button needs to be adjusted and pressed to move the white icon 332 to the right, indicating that the traveling speed given value of the right traveling wheels is in an attenuation state. The further the white icon 332 moves to the right, the greater the attenuation degree of the traveling speed given value of the right traveling wheels is. According to the actual amount of left deviation during actual straight traveling, the position of the white icon 332 on the right power bar is manually adjusted to achieve deviation correction in the left deviation state. If the left operating control device and the right operating control device are in the same state (for example, the tilting positions of the left and right operating lever assemblies 51 are the same), the vehicle deviates to the right, indicating that the wheel speed of the left traveling wheels is fast, and the "turtle"-shaped button needs to be adjusted and pressed to move the white icon 332 to the left, indicating that the traveling speed given value of the left traveling wheels is in an attenuation state. The further the white icon 332 moves to the left, the greater the attenuation degree of the traveling speed given value of the left traveling wheels is. According to the actual amount of right deviation during actual straight traveling, the position of the white icon 332 on the left power bar is manually adjusted to achieve deviation correction in the right deviation state. The deviation correction icon is provided on the display device so that the display is intuitive and the operation is convenient, which is conducive to improving the user experience.

Optionally, the condition for exiting the manual deviation correction mode includes, but is not limited to: the user presses the set button to exit the display interface of the manual deviation correction mode and enter an interface that only displays the power.

It is to be noted that when the mower enters the manual deviation correction mode, the user is required to stop the vehicle. When the mower enters the manual deviation correction mode, the controller displays the current deviation according to the previously stored driving data (for example, the rotational speed of the drive motor). The user uses buttons to attenuate the rotational speed of the motor corresponding to the faster wheel so that the two wheels can have the same rotational speed.

Further, it is to be noted that the manual error correction method described in the preceding example of the present application can be performed more than once. When the user completes a manual error correction, the manual deviation correction mode is automatically exited. During the driving process of the mower, if it is found that the mower still cannot travel in a straight line, the preceding process is repeated until the vehicle can travel in a straight line after the user starts to drive the vehicle.

In the manned mower of the present application, the driver circuit and the controller are integrated on a control board, and the control board is powered by the power supply assembly 20. Based on this, the present application further provides a manned mower so that the problem of detecting the switching signal of the control board is solved.

As shown in FIG. 34, a power take off (PTO) switch 340 is disposed on the power supply branch of the controller of the present application, where the PTO switch 340 is used for controlling an auxiliary power output device. The controller is configured to, when the PTO switch 340 is turned on, be powered on and apply the drive signal to the driver circuit 250 to control the operation of the mowing electric motor M.

With continued reference to FIG. 34, the first terminal of the PTO switch 340 is electrically connected to the power supply assembly 20 via a DC/DC voltage conversion module 341, and the second terminal of the PTO switch 340 is used for controlling the Vp power supply to be powered on. The power supply assembly 20 outputs VHM via a switching transistor to supply power to the driver circuit 250 and the controller on the control board. The PTO switch is configured to control the controller to be powered on and started without detecting the switching signal of the control board.

The working modes of the manned mower of the present application include, but are not limited to, a non-grass collecting mode and a grass collecting mode. In the grass collecting mode, the mower executes the mowing command and collects the cut grass clippings into the grass collecting basket. In a heavy load condition, multiple mowing elements work simultaneously but are prone to be in a locked rotor condition. Based on this, the present application further provides a manned mower so that different output capacities of the mowing electric motor are configured according to the load conditions to improve the grass collecting efficiency on the side of the mowing element.

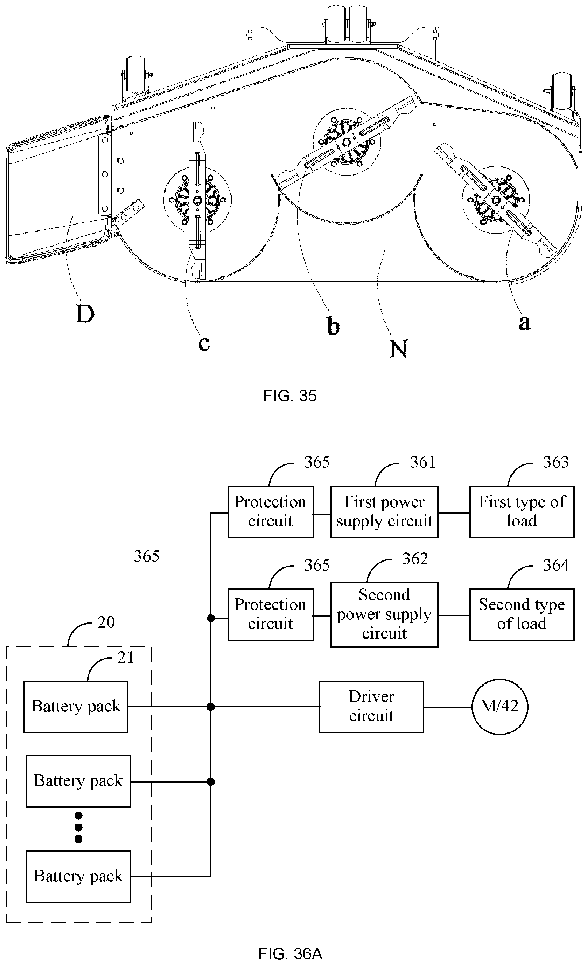

As shown in FIG. 35, the manned mower of the present application includes the traveling wheel set driven by the traveling electric motors; a mower chassis covering the mowing elements; at least three mowing elements (for example, a first cutting element a, a second cutting element b, and a third cutting element c) are provided, where the mowing elements are driven by corresponding mowing electric motors M to rotate to mow grass and generate airflow, and at least part of the airflow can guide grass clippings to the outside of the mower chassis; and a side discharge pipe connecting with a grass discharge port D of a deck to guide grass clippings and airflow. When the manned mower switches from the non-grass collecting mode to the grass collecting mode, all mowing electric motors M have at least three rotational speeds, and the rotational speeds of all mowing elements at the same moment increase in sequence from the mowing element away from the grass discharge port to the mowing element near the grass discharge port. Specifically, as shown in FIG. 35, the distance between the first cutting element a and the grass discharge port D is the maximum, the distance between the third cutting element c and the grass discharge port D is the minimum, the second cutting element b is disposed between the first cutting element a and the third cutting element c, the rotational speed of the first cutting element a is less than the rotational speed of the second cutting element b, and the rotational speed of the second cutting element b is less than the rotational speed of the third cutting element c. The rotational speeds of the multiple mowing elements are configured through the working modes of the mower. For example, the multiple mowing elements have the same rotational speed, or the rotational speeds of the multiple mowing elements increase from left to right, or other control strategies may be adopted so that the corresponding mowing electric motors can be configured with different output capacities according to the load conditions, which is conducive to improving the grass collecting efficiency.

Optionally, when the manned mower switches from the non-grass collecting mode to the grass collecting mode, the directions of rotation of the mowing electric motors M remain unchanged, and the directions of rotation of all the mowing electric motors M are the same. The rotational speed of the mowing electric motor M is configured according to the gear of the mowing electric motor.

Optionally, in the grass collecting mode, all the mowing electric motors have the first overall power; and in a normal mowing mode, all the mowing electric motors have the second overall power, where the first overall power is greater than the second overall power.

Optionally, in the grass collecting mode, the overall output power of the mowing electric motor is greater than or equal to 1 kW. In some examples, in the grass collecting mode, the overall output power of the mowing electric motor is greater than or equal to 1.4 kW In the normal mowing mode, the overall output power of the mowing electric motor is greater than or equal to 1.5 kW. In some examples, in the normal mowing mode, the overall output power of the mowing electric motor is greater than or equal to 1.8 kW

Optionally, the power supply assembly includes at least one battery pack. In some examples, the nominal voltage of the at least one battery pack is greater than or equal to 40 V and less than or equal to 60 V. For the power tool and the battery pack, the nominal voltage generally refers to the voltage specified by the manufacturer or the vendor through the label, the packaging, the user manual, the specification, the advertisement, the marketing document, or another support document of the product so that the user knows which power tool can operate with the battery pack. Alternatively, the nominal voltage of the battery pack may be detected or calculated. The nominal voltage may be the voltage of the battery pack when the state of charge (SOC) of the battery pack is 50%. Generally, the battery pack includes multiple cell units. The voltage of a single cell unit is generally between 3.6 V and 4.2 V. In some examples, the total energy of the power supply assembly is greater than or equal to 2 kW·h and less than or equal to 10 kW·h. The preceding total energy includes the total energy of all battery packs included in the power supply assembly.

The manned mower of the present application further includes a grass collecting basket and a grass collecting switch. The grass collecting basket is used for collecting grass clippings, and the grass collecting switch is used for achieving the switching control between the non-grass collecting mode and the grass collecting mode. Specifically, when it is detected that the grass collecting basket is mounted and the grass collecting switch is triggered, it is determined that the manned mower operates in the grass collecting mode.

For example, the manned mower with three mowing elements is used as an example. When the manned mower operates in the non-grass collecting mode, the three mowing electric motors have the same rotational speed and the same direction of rotation and are controlled to accelerate or decelerate according to the gear input of the mowing electric motors. When the manned mower operates in the grass collecting mode, among the three mowing electric motors, the rotational speed of the left electric motor is set by the gear input, and the rotational speeds of the middle and right electric motors increase gradually relative to the rotational speed of the left electric motor for grass collecting. The three mowing electric motors rotate in the same direction, thereby improving the overall grass collection efficiency.

Based on the same concept, the present application further provides a manned mower so that different output capacities of the mowing electric motor are configured according to the load conditions to improve the grass collecting efficiency on the side of the mowing element. The manned mower of the present application includes the traveling wheel set driven by the traveling electric motors; at least three mowing elements and the mower chassis N covering the at least three mowing elements, where the mowing elements are driven by corresponding mowing electric motors to rotate to mow grass and generate airflow, and at least part of the airflow can guide grass clippings to the outside of the mower chassis N; and the side discharge pipe connecting with the deck to guide grass clippings and airflow. When the manned mower is in the non-grass collecting mode, all the mowing electric motors have the same rotational speed; and when the manned mower is in the grass collecting mode, all the mowing electric motors have at least three rotational speeds so that the mowing elements have at least three different rotational speeds at the same moment.

Optionally, when the manned mower switches from the non-grass collecting mode to the grass collecting mode, the directions of rotation of the mowing electric motors remain unchanged, and the directions of rotation of all the mowing electric motors are the same.

Optionally, in the grass collecting mode, all the mowing electric motors have the first overall power; and in a normal mowing mode, all the mowing electric motors have the second overall power, where the first overall power is greater than the second overall power.

Optionally, the manned mower of the present application further includes a grass collecting basket and a grass collecting switch. The grass collecting basket is used for collecting grass clippings, and the grass collecting switch is used for achieving the switching control between the non-grass collecting mode and the grass collecting mode.

Optionally, in the grass collecting mode, the overall output power of the mowing electric motors are greater than or equal to 1 kW. In some examples, in the grass collecting mode, the output power of the mowing electric motor is greater than or equal to 1.4 kW In the normal mowing mode, the output power of the mowing electric motor is greater than or equal to 1.5 kW. In some examples, in the normal mowing mode, the output power of the mowing electric motor is greater than or equal to 1.8 kW

Optionally, the total energy of the power supply assembly is greater than or equal to 2 kW·h.

The manned mower of the present application may be configured with a power management strategy. The power management strategy includes, but is not limited to, at least one of the following: an auxiliary power supply strategy, a soft start strategy, a battery pack communication strategy, a power distribution strategy, an adapter power supply strategy, and a charging strategy between a large battery and a small battery.

The present application provides a manned mower and illustrates a specific example of the auxiliary power supply strategy. Two DC-DC circuits form independent power supply branches so that the power supply reliability of the core working part of the mower is improved.

As shown in FIGS. 2, 12, and 36A, the manned mower of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; the power supply assembly 20 including at least one battery pack 21 and used for supplying power to the mowing electric motor M or the traveling electric motors 42; and a control device configured to control the power transistors of the driver circuit 250 to be turned on and off to drive the traveling electric motors 42 or the mowing electric motor M to operate. The total energy of the power supply assembly 20 is greater than or equal to 2 kW·h.

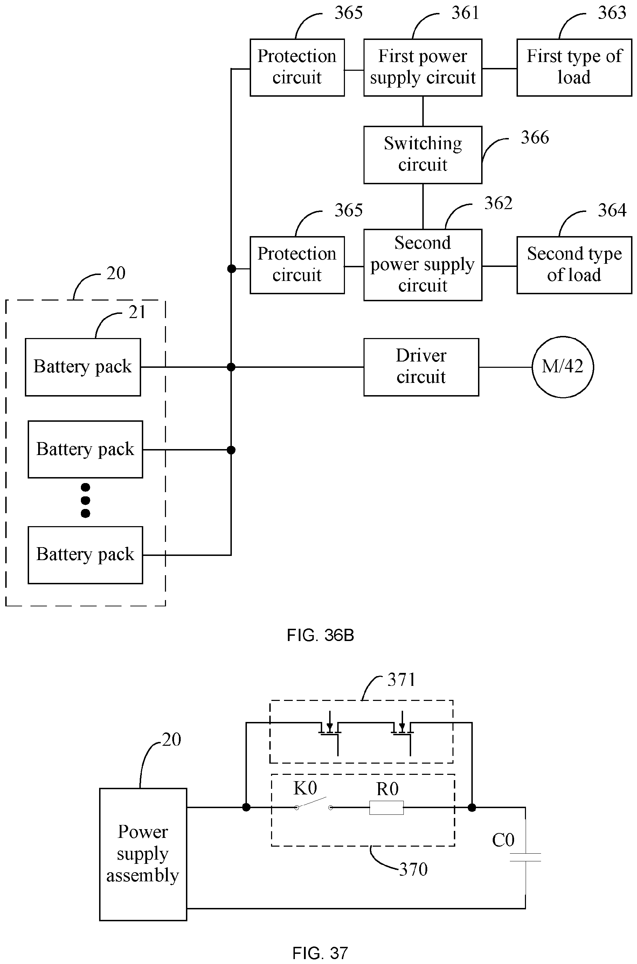

As shown in FIGS. 36A and 36B, the manned mower further includes a first power supply circuit 361 for converting the electric power outputted by the power supply assembly 20 into the first DC power to supply power to a first type of load 363 with a main function; and a second power supply circuit 362 for converting the electric power outputted by the power supply assembly 20 into the second DC power to supply power to a second type of load 364 with an auxiliary function. The second power supply circuit 362 can supply power to the first type of load 363 in the case where the first DC power is disconnected. The first power supply circuit 361 and the second power supply circuit 362 may be DC-DC conversion circuits.

Specifically, the first power supply circuit 361 and the second power supply circuit 362 form independent power supply branches without coupling. The first power supply circuit 361 and the second power supply circuit 362 may be integrated into an independent auxiliary power board. After the auxiliary power board is connected to the battery packs of the power supply assembly 20, the first power supply circuit 361 and the second power supply circuit 362 convert the power supply voltage separately. When the power supply branch where the first power supply circuit 361 is located is powered off, that is, the main function is lost, the second power supply circuit 362 can supply power to the first type of load 363, or the second power supply circuit 362 can supply power to the first type of load 363 and the second type of load 364 at the same time, thereby ensuring that the main function is always powered on, which is conducive to improving the power supply reliability of the system.

Optionally, the first DC power has a first voltage V1, and the second DC power has a second voltage V2; the first voltage V1 is one or more values greater than or equal to 3.3 V and less than or equal to 24 V; and the second voltage V2 is one or more values greater than or equal to 3.3 V and less than or equal to 24 V. In this example, the first voltage V1 and the second voltage V2 may be configured to be equal or unequal. For example, both the first voltage V1 and the second voltage V2 may be equal to 15 V. When the first voltage V1 is not equal to the second voltage V2, the manned mower further includes a voltage conversion circuit for performing voltage conversion on the first DC power or the second DC power.

Optionally, the first type of load 363 includes, but is not limited to, at least one of a traveling electric motor control device, a workpiece electric motor (such as a mowing electric motor) control device, a power supply control device, the display device, and the operating assembly 50. The control devices include, but are not limited to, the controller and other auxiliary control elements. In this example, two traveling electric motor control devices, three mowing electric motor control devices, one power management device, two operating assemblies 50, and one display device may be provided. For example, if the rated operating voltage of the traveling electric motor control device, the mowing electric motor control device, the power supply control device, and the display device is defined as a 15V DC voltage, the maximum operating current of the two traveling electric motor control devices is 0.5 A, the maximum operating current of the three mowing electric motor control devices is 0.75 A, the maximum operating current of the power supply control device is 0.5 A, the maximum operating current of the two operating assemblies 50 is 0.2 A, and the maximum operating current of the display device is 1 A, then the output voltage of the first power supply circuit 361 may be equal to 15 V, the output current is equal to 3.0 A, and the output power of the first power supply circuit 361 is equal to 45 W.

Optionally, the second type of load 364 includes, but is not limited to, at least one of a light, a position light, an indicator light, a charging output interface, or the seat 91. The charging output interface may be a Universal Serial Bus (USB) interface that complies with the power delivery (PD) fast charging protocol. The light, the position light, and the indicator light may use light-emitting diodes (LEDs). For example, if the rated operating voltage of the LED lamp, the charging output interface, or the seat 91 is defined as a 15V DC voltage, the maximum operating current of the LED lamp is 1.5 A, the maximum operating current of the charging output interface is 1.5 A, and the maximum operating current reserved for other second type of loads 364 is 0.5 A, then the output voltage of the second power supply circuit 362 may be 15 V, the output current is 3.5 A, and the output power of the second power supply circuit 362 is equal to 52.5 W.

As shown in FIG. 36A, the input terminal of the first power supply circuit 361 is connected to at least one battery pack 21 via a protection circuit 365, and the output terminal of the first power supply circuit 361 is connected to at least one first type of load 363. The input terminal of the second power supply circuit 362 is connected to at least one battery pack 21 via the protection circuit 365, and the output terminal of the second power supply circuit 362 is connected to at least one second type of load 364. The second power supply circuit 362 and the first power supply circuit 361 are integrated on the same control board (for example, the auxiliary power board).

As shown in FIG. 36B, a switching circuit 366 is provided between the first power supply circuit 361 and the second power supply circuit 362, and the switching circuit 366 is used for the automatic switching after the first power supply circuit 361 is disconnected so that the second power supply circuit 362 can supply power to the first type of load 363.

Based on the same inventive concept, the present application further provides an outdoor traveling device and illustrates a specific example of the auxiliary power supply strategy. Two DC-DC circuits form independent power supply branches so that the power supply reliability of the core working part of the mower is improved. The following are included: the vehicle frame; the traveling wheel set connected to and supporting the vehicle frame, where the traveling wheel set is driven by the traveling electric motors; the power supply assembly including at least one battery pack and used for supplying power to the traveling electric motors; and the control device configured to output control signals to control the operation of the traveling electric motors. As shown in FIGS. 36A and 36B, the outdoor traveling device further includes the first power supply circuit 361 for converting the electric power outputted by the power supply assembly 20 into the first DC power to supply power to the first type of load 363 with the main function; and the second power supply circuit 362 for converting the electric power outputted by the power supply assembly 20 into the second DC power to supply power to the second type of load 364 with the auxiliary function.

Optionally, the first DC power has a first voltage, and the second DC power has a second voltage; the first voltage is one or more values greater than or equal to 3.3 V and less than or equal to 24 V; and the second voltage is one or more values greater than or equal to 3.3 V and less than or equal to 24 V.

Optionally, the first type of load 363 includes, but is not limited to, at least one of a traveling electric motor control device, a mowing electric motor control device, a power supply control device, the display device, and the operating assembly.

Optionally, the second type of load 364 includes, but is not limited to, at least one of a light, a position light, an indicator light, a charging output interface, or the seat.

Referring to FIG. 36B, the input terminal of the first power supply circuit 361 is connected to at least one battery pack via the protection circuit 365, and the output terminal of the first power supply circuit 361 is connected to at least one first type of load 363.

Referring to FIG. 36B, the input terminal of the second power supply circuit 362 is connected to at least one battery pack via the protection circuit 365, and the output terminal of the second power supply circuit 362 is connected to at least one second type of load 364. The second power supply circuit 362 and the first power supply circuit 361 are integrated on the same control board.

Referring to FIG. 36B, a switching circuit 366 is provided between the first power supply circuit 361 and the second power supply circuit 362, and the switching circuit 366 is used for the automatic switching after the first power supply circuit 361 is disconnected so that the second power supply circuit 362 can supply power to the first type of load 363. After the first DC power is disconnected, the second power supply circuit 362 can supply power to the first type of load 363 and the second type of load 364 at the same time.

The present application further provides a manned mower and illustrates a specific example of the soft start strategy. When the power management strategy of the whole machine is adopted, due to the large capacitance between the positive and negative electrodes of the host-side electronic control and other components, the output of the power bus charges the capacitor at the moment of being turned on, which is similar to a short circuit. The instantaneous charge current is about 500 A to 1000 A. The current may cause damage to the battery pack, cause a short circuit in the battery pack fuse, cause damage to the wire harnesses, connectors, and components (electronic switches such as power transistors) in the loop, and cause other hazards. The soft start circuit is provided so that circuit damage caused by inrush current can be avoided, and the power supply reliability can be improved.

As shown in FIGS. 2 and 12, the manned mower of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; and the power supply assembly 20 including at least one battery pack 21. As shown in FIG. 37, the manned mower of the present application further includes a soft start module 370 configured to start and control the mowing electric motor M or the traveling electric motors 42 by charging the capacitor.

As shown in FIG. 37, a main circuit module 371 and the soft start module 370 are set in the bus between the power supply assembly 20 and the load, where the main circuit module 371 is provided with switching elements such as power transistors, and the controller achieves the main circuit control by controlling the on and off of the switching elements in the main circuit module 371 in the bus. The soft start module 370 includes a resistor R0, a switching element K0, and a load capacitor C0. Before the main circuit module 371 in the bus is started, the soft start module 370 is first turned on to charge the load capacitor C0 through the resistor R0. When the load capacitor C0 is fully charged, the main circuit module 371 is started.

In this example, the resistor R1 and the load capacitor C370 satisfy formula 1 below.

$$\begin{cases} U_c = U_S * \left(1 - e^{-\frac{t}{RC}}\right) \\ I_c = \frac{U_S}{R} * e^{-\frac{t}{RC}} \end{cases} \qquad \text{(Formula 1)}$$

$U_c$ denotes the charge voltage of the load capacitor C370; $U_S$ denotes the charge voltage outputted by the power supply assembly 20; $I_c$ denotes the charge current; R denotes the resistance value of the resistor R0; and C denotes the capacitance value of the load capacitor C0.

In conjunction with formula 1, when $t = 3 * RC$, $U_c = 0.95 * U_S$, and the load capacitor C0 is basically fully charged. The actual startup time of the whole machine is generally between 1s and 2s. If the startup time is defined as 1s, the resistor R0 and the load capacitor C0 satisfy: $3 * RC \leq 1$, and $R \leq \frac{1}{3C}$ is calculated. In actual application, the resistance value of the resistor R0 in the soft start module 370 may be calculated according to the actual capacitance value on the capacitor board.

The present application further provides a manned mower and illustrates a specific example of a power communication structure. In this example, a battery management module and the battery pack are connected using the RS-485 bus, and a bus polling method is used for data communication so that the node configuration is flexible and the scalability is strong. As shown in FIGS. 2 and 12, the manned mower of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; and the power supply assembly 20 including at least one battery pack 21.

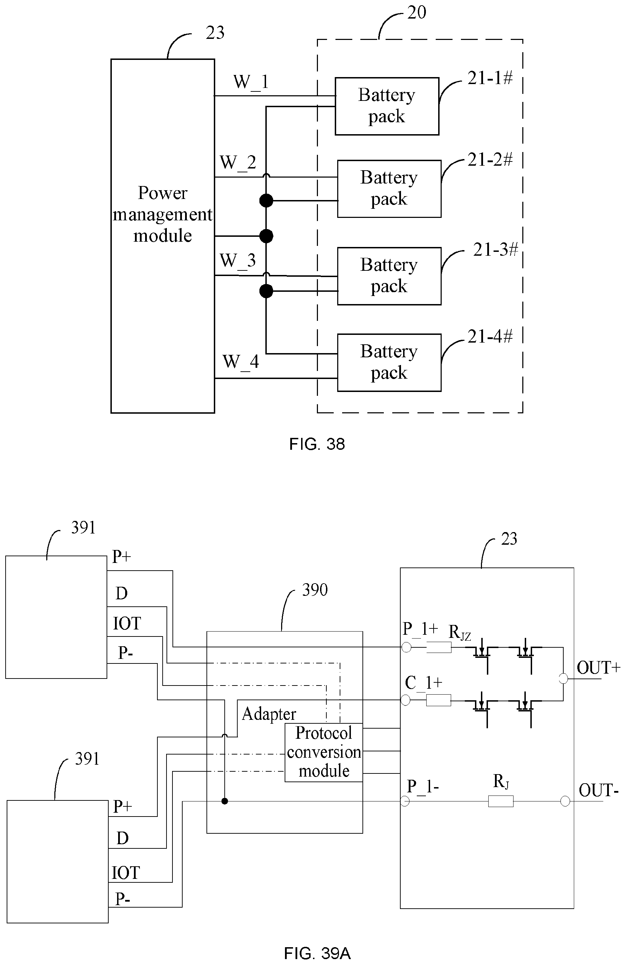

As shown in FIG. 38, the manned mower of the present application further includes the power management module 23 configured to output a control signal to control the battery pack 21 to supply power to the mowing electric motor M or the traveling electric motors 42, and the power management module 23 is further configured to perform data interaction with at least one battery pack 21 (for example, battery pack 21-1#) in an active communication manner. Specifically, the power management module 23 and the battery pack 21 may be connected using the RS-485 bus. The power management module 23 communicates with the battery pack 21 in the active communication manner, and the battery pack 21 responds passively. The communication baud rate between the power management module 23 and the battery pack 21 may be set to 460800 bit/s, and the data transmission cycle may be set to 25ms.

As shown in FIG. 38, the case where the power supply assembly 20 is provided with four battery packs (battery pack 21-1 #, battery pack 21-2#, battery pack 21-3#, and battery pack 21-4#) is used as an example, the power management module 23 communicates in a bus polling method, and the potentials of pins W_1 to W_4 are lowered one by one. When the power management module 23 lowers the potential of pin W_1, the power management module 23 communicates with battery pack 21-1 #; when the power management module 23 lowers the potential of pin W_2, the power management module 23 communicates with battery pack 21-2#; when the power management module 23 lowers the potential of pin W_3, the power management module 23 communicates with battery pack 21-3#; and when the power management module 23 lowers the potential of pin W_4, the power management module 23 communicates with battery pack 21-4#. Therefore, the communication of multiple data nodes is achieved in the bus polling method so that the node configuration is flexible and the scalability is strong.

The present application further provides a manned mower and illustrates a specific example of the battery holder design. As shown in FIG. 3, the manned mower of the present application includes at least two (for example, four) battery holders, each of which can accommodate one large battery pack LFP or two small battery packs EGO. In this example, each battery holder is compatible with the large battery pack LFP and the small battery pack EGO, thereby improving the battery life. Without using an adapter, each battery holder has two interfaces for the small battery packs EGO and one interface for the large battery pack LFP. To ensure the normal power supply requirements of the mower, the number of large battery packs LFP and the number of small battery packs EGO satisfy the following: when the number of large battery packs LFP is greater than or equal to 1, the number of small battery packs EGO is greater than or equal to 0; and when the number of large battery packs LFP is equal to 0, the number of small battery packs EGO is greater than or equal to 2. It is to be noted that all functions of the battery pack are integrated into the power management module 23 (referring to FIG. 38).

In this example, the large battery pack LFP can charge the small battery pack EGO.

In this example, the same battery holder is compatible with the large battery pack LFP and the small battery pack EGO. When the small battery pack EGO is inserted, the data of the small battery pack EGO needs to be forwarded using the protocol of the large battery pack LFP. Based on this, a battery pack adapter solution needs to be added to achieve the protocol conversion processing of the small battery pack EGO.

The present application further provides a manned mower and illustrates specific examples of various power adapters, and the charge and discharge control between battery packs is optimized through the power adapters. As shown in FIGS. 39A to 39C, the manned mower of the present application further includes an adapter 390, one terminal of the adapter 390 communicates with the small battery packs 391 (EGO), and the other terminal of the adapter 390 communicates with the power management module 23.

Referring to FIGS. 39A to 39C, the case where the two small battery packs 391 are provided in the battery holder is used as an example, each small battery pack 391 (EGO) is provided with a positive output pin P+, a negative output pin P-, and data transmission pins D and IOT, the adapter 390 is integrated with a protocol conversion module, and the protocol conversion module is connected to the data transmission pins D and IOT of the small battery pack 391 and used for forwarding the data of the small battery pack to the power management module 23 using the protocol of the large battery pack. The power management module 23 is provided with a first positive input pin P_1+, a second positive input pin C_1+, a first negative input pin P_1-, a positive output pin OUT+, and a negative output pin OUT-. The first positive input pin P_1+ is connected to the positive output pin P+ of the first small battery pack 391, the second positive input pin c_1+ is connected to the positive output pin P+ of the second small battery pack 391, the first positive input pin P_1+ and the second positive input pin C_1+ are connected to the positive output pin OUT+ via independent main circuit switching transistors, and the first negative input pin P_1-is connected to the negative output pin P- of at least one small battery pack 391 (EGO) and is connected to the negative output pin OUT- via a current sense resistor $R_J$.

As shown in FIG. 39A, the manned mower of the present application further includes a positive current sense resistor $R_{JZ}$ disposed at the positive terminal of the main circuit of the power management module 23 and used for collecting circuit current.

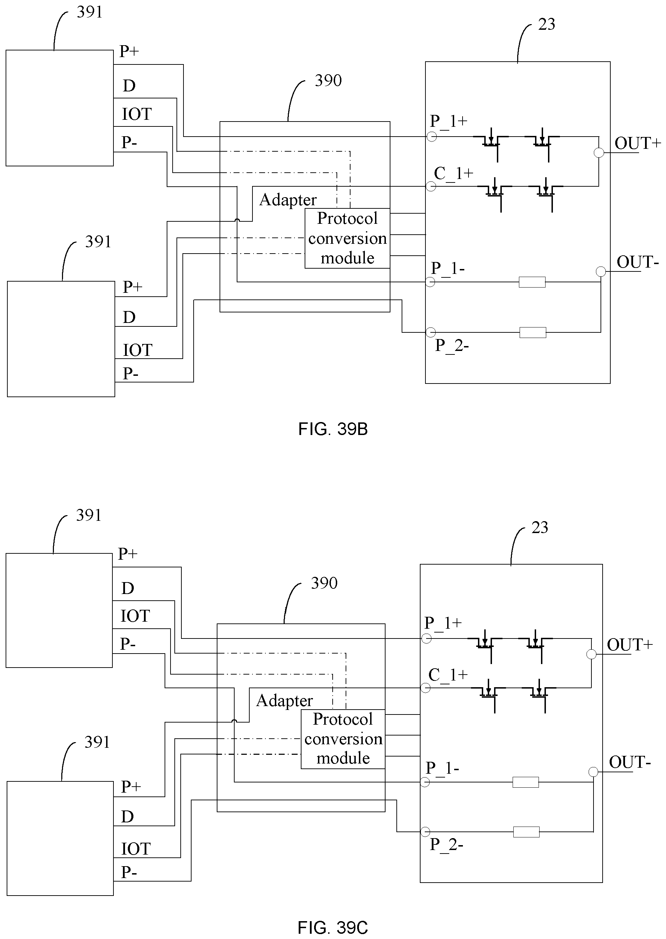

As shown in FIG. 39B, the manned mower of the present application further includes at least two negative input pins (for example, the first negative input pin P_1- and the second negative input pin P_2-) provided in the power management module 23. When one large battery pack is inserted into the battery holder, one negative input pin (for example, the first negative input pin P_1-) is occupied; and when two small battery packs are inserted into the battery holder, two negative input pins (for example, the first negative input pin P_1- and the second negative input pin P_2-) are occupied.

As shown in FIG. 39C, in the manned mower of the present application, the adapter 390 includes switching elements and current sense resistors, the switching elements are disposed between the positive output pin P+ of the battery pack and the positive input pin (for example, the first positive input pin P_1+ or the second positive input pin c_1+) of the power management module 23, and each battery pack corresponds to a group of switching elements. The current sense resistors include single-branch current sense resistors Rp- and a total current sense resistor $R_{ZP-}$. The single-branch current sense resistor $R_{P-}$ is connected to the negative output pin P- of the battery pack and is used for detecting the charge and discharge current of the corresponding single battery pack; one terminal of the total current sense resistor $R_{ZP-}$ is connected to the single-branch current sense resistors $Rp_-$, and the other terminal of the total current sense resistor $R_{ZP-}$ is connected to the negative input pin (for example, the first negative input pin P_1-) of the power management module 23 and is used for detecting the total charge and discharge current of all connected battery packs. The switching elements and the current sense resistors are integrated into the adapter so that battery pack equalization control and battery pack charge and discharge control are achieved.

The present application further provides a manned mower and illustrates a specific example of the power distribution strategy. Power distribution is performed by monitoring the battery pack state and the power demand information of the components of the whole machine so that the whole machine operates more reasonably and efficiently. As shown in FIGS. 2 and 12, the manned mower of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; the power supply assembly 20 including at least one battery pack 21 and used for supplying power to the mowing electric motor M or the traveling electric motors 42; and the control device configured to output control signals to control the operation of the traveling electric motors 42 or the mowing electric motor M. The control device of the present application is further configured to acquire the total current value outputted by the power supply assembly 20 (for example, the average value within 10s) and based on the current state of the power supply assembly 20 and the total current value, output the control signals related to the operation of the mowing electric motor M. The current state of the power supply assembly 20 includes the maximum discharge capacity of the power supply assembly 20. Typically, the maximum discharge capacity may be represented by either the maximum discharge current or the maximum discharge power of the power supply assembly 20 within a preset period (for example, 10s).

In this example, the control signals related to the operation of the mowing electric motor M include, but are not limited to, a current limiting operation control signal or a power reduction operation control signal. Specifically, the power value required by the whole machine may be calculated according to the total current value outputted by the power supply assembly 20. Further, the maximum discharge capacity of the battery pack is compared with the power value required by the whole machine. When the maximum discharge capacity of the battery pack is less than the power value required by the whole machine, the control signal is outputted to the mowing electric motor M to control the mowing electric motor M to operate with limited current and reduced power. Since the power requirements of the components of the whole machine are inconsistent, the whole machine can operate more reasonably by distributing power reasonably.

In an example, the control device of the present application is configured to, based on the maximum discharge capacity and the total current value, control the manned mower to enter a power limiting mode; in the power limiting mode, limit the output power of the mowing electric motor M based on the maximum discharge capacity; and after the mowing electric motor M is limited and stopped, limit the output power of the traveling electric motors 42.

Optionally, the control device is configured to determine a current threshold according to the maximum discharge capacity, compare the total current value with the current threshold, and determine whether the total current value is greater than the current threshold. The case where the maximum discharge capacity is the maximum discharge current $I_{SOP}$ is used as an example, and the current threshold may be expressed as $1.1 * I_{SOP}$. The control device is further configured to, when the total current value is greater than the current threshold, acquire the duration of the current state (that is, the state in which the maximum discharge capacity is relatively low), compare the duration of the current state with a time threshold, and based on the current comparison result and the duration comparison result, determine whether to control the manned mower to enter the power limiting mode. The time threshold represents the waiting time for entering the power limiting mode from the current mode. Specifically, if the total current value is greater than the current threshold and the duration of the state in which the maximum discharge capacity is relatively low is greater than the time threshold, the control device controls the manned mower to enter the power limiting mode; if the total current value is less than or equal to the current threshold or the duration of the state in which the maximum discharge capacity is relatively low is less than or equal to the time threshold, the total current value outputted by the power supply assembly 20 is detected continuously, and the preceding determination logic is executed.

Optionally, when the time threshold is acquired, the control device of the present application is configured to determine the time threshold according to the SOC value of the power supply assembly 20. The time threshold is positively correlated to the SOC value, that is, the greater the SOC value of the power supply assembly 20, the greater the time threshold. Specifically, when the SOC value of the power supply assembly 20 is greater than 20%, the time threshold may be equal to 1 min; when the SOC value of the power supply assembly 20 is greater than 10% and less than or equal to 20%, the time threshold may be set to a value greater than or equal to 10s and less than 1 min, and the time threshold gradually decreases as the SOC value decreases; and when the SOC value of the power supply assembly 20 is less than or equal to 10%, the time threshold is 0, that is, the manned mower is immediately controlled to enter the power limiting mode.

Optionally, in the power limiting mode, the control device is configured to acquire the traveling electrical parameters of the traveling electric motors 42, determine the upper limit threshold and the lower limit threshold based on the traveling electrical parameters, and determine the output power of the mowing electric motor M according to the maximum discharge capacity, the upper limit threshold, and the lower limit threshold. The traveling electrical parameters of the traveling electric motors 42 include, but are not limited to, the bus current of the traveling electric motor, the output current of the traveling electric motor, or the operating power of the traveling electric motor.

Optionally, when the output power of the mowing electric motor M is determined according to the maximum discharge capacity, the upper limit threshold, and the lower limit threshold, the control device is further configured to, when the maximum discharge capacity is greater than the upper limit threshold, determine the output power of the mowing electric motor M according to the total current value and the traveling electrical parameters. When the maximum discharge capacity is less than the upper limit threshold, the mowing electric motor M is controlled to stop, and the output power of the traveling electric motors 42 is limited based on the maximum discharge capacity so that the traveling electrical parameters satisfy the preset condition, where the preset condition is set based on the maximum discharge capacity.

For example, the case where the total current value outputted by the power supply assembly 20 is defined as $I_{total}$, the maximum discharge capacity is the maximum discharge current $I_{SOP}$, and the traveling electrical parameter is the output current $I_{wheel}$ of the traveling electric motor (for example, the average value of the output current of the traveling electric motor within 10s) is used as an example, the upper limit threshold may be set to $1.1 * I_{wheel}$, and the lower limit threshold may be set to $0.9 * I_{wheel}$. The maximum discharge current $I_{SOP}$ of the power supply assembly 20 is compared with the upper limit threshold (for example, $1.1 * I_{wheel}$) and the lower limit threshold (for example, $0.9 * I_{wheel}$) separately. If the maximum discharge current $I_{SOP}$ is greater than the upper limit threshold (for example, $1.1 * I_{wheel}$), the output power of the mowing electric motor M is limited so that the output current $I_M$ of the mowing electric motor M satisfies: $I_M = I_{total} - I_{wheel}$. If the maximum discharge current $I_{SOP}$ is less than the lower limit threshold (for example, $0.9 * I_{wheel}$), the mowing electric motor M is controlled to stop operating, and the output power of the traveling electric motors 42 is limited so that the output current $I_{wheel}$ of the traveling electric motor satisfies: $I_{wheel} < I_{SOP}$, where $I_{SOP}$ denotes the maximum discharge current of the power supply assembly 20 at the current moment.

Optionally, in the power limiting mode, the control device is further configured to disable the power limiting mode when the total current value outputted by the power supply assembly 20 is less than a preset current value (for example, 5 A) and both the mowing electric motor M and the traveling electric motors stop operating.

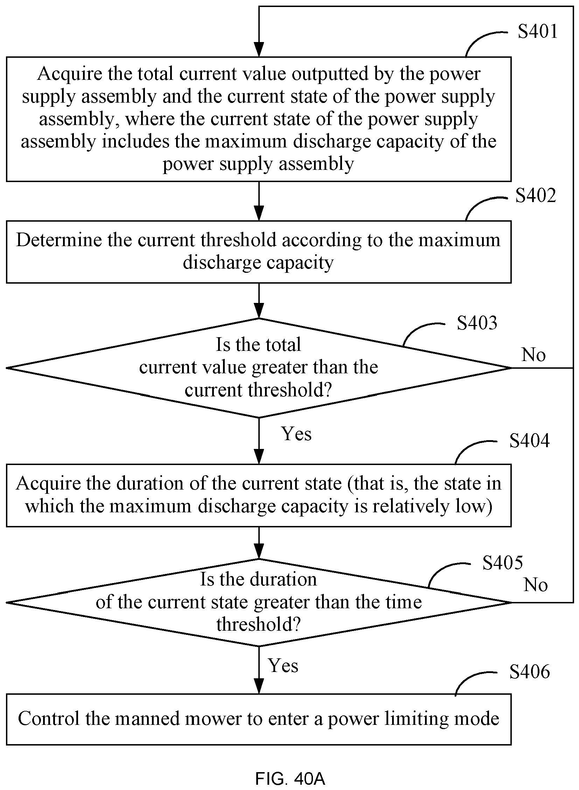

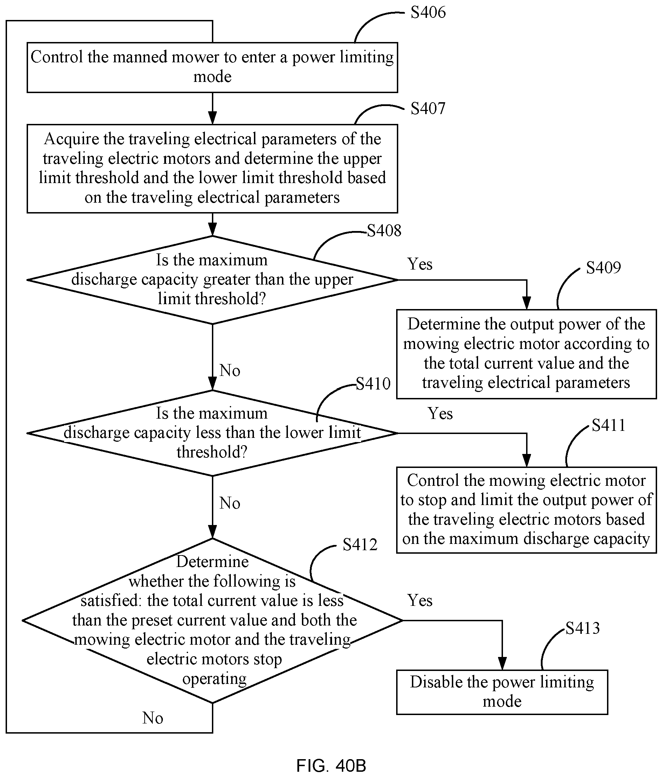

Based on the same concept, the present application further provides a power distribution method for a manned mower. In this example, power distribution is performed by monitoring the battery pack state and the power demand information of the components of the whole machine so that the whole machine operates more reasonably and efficiently. As shown in FIGS. 40A and 40B, the power distribution method for a manned mower specifically includes the steps below.

In S401, the total current value outputted by the power supply assembly and the current state of the power supply assembly are acquired, where the current state of the power supply assembly includes the maximum discharge capacity of the power supply assembly.

Typically, the maximum discharge capacity may be represented by either the maximum discharge current or the maximum discharge power of the power supply assembly within a preset period (for example, 10s).

In S402, the current threshold is determined according to the maximum discharge capacity.

In S403, whether the total current value is greater than the current threshold is determined.

If the total current value is greater than the current threshold, step S404 is performed; and if the total current value is less than or equal to the current threshold, step S401 is performed.

In S404, the duration of the current state (that is, the state in which the maximum discharge capacity is relatively low) is acquired.

In S405, whether the duration of the current state is greater than the time threshold is determined.

If the duration of the state in which the maximum discharge capacity is relatively low is greater than the time threshold, step S406 is performed; and if the duration of the state in which the maximum discharge capacity is relatively low is less than or equal to the time threshold, step S401 is performed.

In S406, the manned mower is controlled to enter a power limiting mode.

In the power limiting mode, the power distribution method for a manned mower of the present application includes the steps below.

In S407, the traveling electrical parameters of the traveling electric motors are acquired and the upper limit threshold and the lower limit threshold are determined based on the traveling electrical parameters.

In S408, whether the maximum discharge capacity is greater than the upper limit threshold is determined.

If the maximum discharge capacity is greater than the upper limit threshold, step S409 is performed; and if the maximum discharge capacity is less than the upper limit threshold, step S410 is performed.

In S409, the output power of the mowing electric motor is determined according to the total current value and the traveling electrical parameters.

In S410, whether the maximum discharge capacity is less than the lower limit threshold is determined.

If the maximum discharge capacity is less than the lower limit threshold, step S411 is performed; and if the maximum discharge capacity is greater than the lower limit threshold, step S412 is performed.

In S411, the mowing electric motor is controlled to stop and the output power of the traveling electric motors is limited based on the maximum discharge capacity.

In S412, whether the following is satisfied is determined: the total current value outputted by the power supply assembly is less than the preset current value (for example, 5 A) and both the mowing electric motor and the traveling electric motors stop operating.

If the total current value outputted by the power supply assembly is less than the preset current value (for example, 5 A) and both the mowing electric motor and the traveling electric motors stop operating, step S413 is performed; and if not, step S406 is performed.

In S413, the power limiting mode is disabled.

The present application further provides the outdoor traveling device 100 used for performing the preceding power distribution method and having the same functional modules and beneficial effects as the preceding manned mower. Power distribution is performed by monitoring the battery pack state and the power demand information of the components of the whole machine so that the whole machine operates more reasonably and efficiently. As shown in FIGS. 2 and 12, the outdoor traveling device 100 of the present application includes the vehicle frame 11 and the support portion mounted to the vehicle frame 11 and used for supporting the user; the traveling wheel set 41 connected to and supporting the vehicle frame 11, where the traveling wheel set 41 is driven by the traveling electric motors 42; the mowing element driven by the mowing electric motor M; the power supply assembly 20 for supplying power to the mowing electric motor M or the traveling electric motors 42; and the control device configured to output control signals to control the operation of the traveling electric motors 42 or the mowing electric motor M. The control device is further configured to, based on the current state of the power supply assembly 20 and the total current value of the outdoor traveling device, control the outdoor traveling device to enter a power limiting mode; in the power limiting mode, limit the output power of the mowing electric motor M based on the current state of the power supply assembly 20; and after the mowing electric motor M is limited and stopped, limit the output power of the traveling electric motors 42.

Optionally, the current state of the power supply assembly 20 includes the maximum discharge capacity of the power supply assembly 20. The control device is configured to determine a current threshold according to the maximum discharge capacity; compare the total current value with the current threshold; when the total current value is greater than the current threshold, acquire the duration of the current state; compare the duration of the current state with a time threshold; and based on the current comparison result and the duration comparison result, determine whether to control the outdoor traveling device to enter the power limiting mode.

Optionally, the control device is configured to acquire the SOC value of the power supply assembly 20 and determine the time threshold according to the SOC value.

Optionally, in the power limiting mode, the control device is further configured to acquire the traveling electrical parameters of the traveling electric motors 42, determine the upper limit threshold and the lower limit threshold based on the traveling electrical parameters, and determine the power limiting strategy of the mowing electric motor M according to the maximum discharge capacity, the upper limit threshold, and the lower limit threshold.

Optionally, the control device is configured to determine the output power of the mowing electric motor M according to the total current value and the traveling electrical parameters when the maximum discharge capacity is greater than the upper limit threshold.

Optionally, the control device is configured to, when the maximum discharge capacity is less than the upper limit threshold, control the mowing electric motor M to stop, and limit the output power of the traveling electric motors 42 based on the maximum discharge capacity.

The present application further provides a manned mower that integrates at least one of wireless communication, positioning, and attitude detection technologies and can implement at least one of the following functions: recording the working trajectory of the mower; finding the position of the mower; retrieving the mower according to the position after the mower is lost; detecting the overturning state of the mower, and discovering and alarming in time; a remote over-the-air (OTA) upgrade; transmission of information such as mower fault information, abnormal working information, and accessory loss prediction; and pushing fault repair information to the user and prompting the user to replace the faulty part in time. As shown in FIGS. 2 and 12, the manned mower of the present application includes the vehicle frame 11 and the support portion mounted to the vehicle frame 11 and used for supporting the operator; the traveling wheel set 41 connected to and supporting the vehicle frame 11, where the traveling wheel set 41 is driven by the traveling electric motors 42; the mowing element driven by the mowing electric motor; and the power supply assembly 20 including at least one battery pack 21 and used for supplying power to the traveling electric motors 42 and the mowing electric motor. As shown in FIG. 41, the manned mower of the present application further includes a microcontroller unit (MCU) configured to output control signals to control the operation of the traveling electric motors 42 or the mowing electric motor M; and a wireless communication module 410 configured to be capable of communicating bidirectionally with an external device and used for transmitting data information to the external device and receiving input information from the external device. The MCU is configured to control the manned mower to enter a remote control mode in response to the input information from the external device at least when it is detected that no operator is on the support portion and the mowing electric motor M does not operate. In the remote control mode, the MCU prohibits the mowing electric motor M from rotating. In the remote control mode, the MCU is configured to control the operation of the traveling electric motors 42 according to the first preset condition based on the input information from the external device. Specifically, when no operator is on the support portion and the mowing electric motor M does not operate, in response to the input information from the external device, if towing is required, the mower may be controlled by the wireless communication module (such as a Bluetooth module) to move forward or backward or to the left or right at a fixed low speed. The remote control mode is provided so that the following problem is solved: the existing local control method makes it difficult to avoid dangerous working conditions, affecting operational safety. The wireless communication, positioning, and attitude detection technologies are integrated so that remote control and data maintenance can be achieved.

In this example, the data information sent by the wireless communication module 410 to the external device includes, but is not limited to, at least one of the upgrade state and current firmware version information of the wireless communication module, the traveling trajectory, mowing trajectory, and real-time position of the manned mower, and the overturning state of the manned mower. The input information from the external device includes at least one of the following: a remote connection instruction, a traveling direction, a mowing direction, a traveling speed, a mowing speed, and a software update data packet.

In some examples, for example, when the mower operates in a high-speed driving mode, the first preset condition is that the rotational speed is less than or equal to 10 mph. In some examples, for example, when the mower operates in a medium-speed driving mode, the first preset condition is that the rotational speed is less than or equal to 8 mph. In some examples, for example, when the mower operates in a low-speed driving mode, the first preset condition is that the rotational speed is less than or equal to 6 mph. In some examples, for example, when the mower operates in the low-speed driving mode, the first preset condition is that the rotational speed is less than or equal to 4 mph. In some examples, for example, when the mower operates in a position retrieval mode, the first preset condition is that the rotational speed is less than or equal to 2 mph.

As shown in FIG. 41, the manned mower further includes a positioning module 411. The positioning module 411, the wireless communication module 410, and the display device are mounted together and used as a whole. Alternatively, the positioning module 411 may be integrated with the wireless communication module 410 to form an independent module mounted on the mower, connected to other modules via a bus, acquiring information from other modules in the bus, and sending the data and state of the independent module. The positioning module 411 of the present application is configured to record the traveling trajectory, mowing trajectory, and real-time position of the manned mower and send the traveling trajectory, mowing trajectory, and real-time position to a terminal server through the wireless communication module. Specifically, the positioning module 411 may be any one of the following: a Global Positioning System (GPS) positioning module, a BeiDou positioning module, a Wi-Fi AP positioning module, and a Bluetooth positioning module. In this example, an independent GPS positioning module may be used to position the vehicle with high positioning accuracy. The terminal server may push the traveling trajectory and mowing trajectory to a user terminal, the map function is integrated into the user terminal, and trajectory lines of different colors are used to distinguish and display the traveling trajectory and mowing trajectory on the map.

As shown in FIG. 41, the manned mower further includes an attitude detection module 412 for detecting the overturning state of the manned mower. The wireless communication module 410 is further configured to send the overturning state to the terminal server, and the terminal server pushes the overturning state to the user. In this example, the attitude detection module 412 includes, but is not limited to, a multi-axis accelerometer and a gyroscope. The multi-axis accelerometer and the gyroscope may be used to jointly detect the attitude of the vehicle. By analyzing the acceleration sensor data, wheel speed, and the like, the sideslip state of the vehicle can be determined and the sideslip state can be corrected. Specifically, when the acceleration in two or three axes detected by the accelerometer is greater than a certain value and an angular velocity in one or more directions detected by the gyroscope is greater than a rated value (the rated value is acquired through a large number of previous tests), it is considered that the vehicle is about to tilt and overturn. The fault information and solutions are pushed to the user synchronously with sound, light, or display information reminders. At the same time, the mowing electric motors and the traveling electric motors are stopped. In some examples, the attitude detection module 412 includes an inertial measurement unit (IMU). The IMU and the positioning module may be placed below the cover on the left side of the seat.

In some examples, the attitude detection module 412 is used for acquiring the three-axis attitude angles of the mower relative to the ground in real time, which represent the pitch angle, the yaw angle, and the roll angle, as well as acceleration and angular velocity data. The IMU is fixed to the vehicle. For example, the IMU is fixedly mounted to the vehicle frame or other fixed vehicle body structures.

In some examples, the user may set the vehicle tilt alarm angle data through the external device or display screen. Specifically, when the attitude sensor detects that the attitude angle is greater than a threshold, an alarm is issued. The threshold is an option table, and the optional angles include, but are not limited to, 10°, 15°, 20°, and 25°. When the vehicle body attitude is at a critical angle, a prompt is displayed on the display screen. When the tilt angle of the vehicle is greater than a set angle, alarm information is outputted through the display screen. In some examples, through the output of the attitude detection module 412, whether the vehicle operates on a slope is determined, the electric motor speed is controlled, and the controllability of the slope driving is improved. In some examples, in assisted driving control, through closed-loop control of the vehicle body attitude, the traveling direction is automatically controlled, and constant direction adjustment is avoided, thereby reducing the workload of the driver and improving the driving experience.

In this manner, by measuring the three-axis angles of the operating device in real time, a vehicle body tilt alarm is issued when the vehicle travels on a slope so that the vehicle can be prevented from overturning on the slope; the vehicle speed is controlled when the vehicle travels on the slope so that the slope handling performance is improved; the measurement of the three-axis angles of the operating device is also used for attitude control during vehicle assisted driving, including traveling direction locking, autonomous driving positioning, and other controls. As shown in FIG. 41, the manned mower of the present application further includes an alarm module 413 connected to the wireless communication module 410 or the controller. The wireless communication module 410 is further configured to receive the alarm control command issued by the terminal server, and the alarm module sends alarm information.

Optionally, the data transmission manner of the wireless communication module 410 includes at least one of the following: Bluetooth, Wi-Fi, ZigBee, LoRa, or 4G. Specifically, a 4G module may be used for data transmission, and based on the base station positioning principle, the position information of the mower is acquired through base station positioning. In some examples, the data transmission manner of the wireless communication module 410 further includes 433 MHz wireless communication, 915 MHz wireless communication, 2.4 GHz wireless communication, 5.8 GHz wireless communication, and other wireless communication manners in open radio frequency bands that do not require a license.

As shown in FIG. 41, the controller performs bidirectional data transmission with the wireless communication module 410, the positioning module 411, the attitude detection module 412, and the alarm module 413 separately so that data monitoring, early warning, and control in different application scenarios are achieved.

When the mower is operating, the positioning module 411 records the traveling trajectory, mowing trajectory, and real-time position of the vehicle separately, and the real-time position of the mower is uploaded to the terminal server through the wireless communication module 410 (for example, the 4G module).

When the mower is lost, the positioning module 411 (for example, a GPS module) periodically acquires the real-time position of the mower, and the position information is uploaded to the terminal server through the wireless communication module 410 (for example, the 4G module). The terminal server may push the traveling trajectory and mowing trajectory to a user terminal, the map function is integrated into the user terminal, and trajectory lines of different colors are used to distinguish and display the traveling trajectory and mowing trajectory on the map. The user sets an electric fence (that is, a range defined on the map) on the map through an application integrated into the terminal. When the mower is not within the electric fence (that is, the position of the mower is beyond the defined range), an alarm is sent to the user, allowing the user to retrieve the lost mower. After the user arrives near the mower, the user may send a command through the mobile phone to make the alarm module 413 of the vehicle perform sound and light alarms to indicate the position of the vehicle.

When the mower needs to perform a software update, the terminal server transmits the update package through the wireless communication module 410 (for example, the 4G module) and pushes the update data to the mower, and the current update state and current firmware version information of the mower are fed back through the wireless communication module 410 (for example, the 4G module).

When the mower fault information is detected, the fault details are transmitted by the wireless communication module 410 (for example, the 4G module) to the server for storage and backup, and the fault information and solutions are pushed to the user synchronously. When the mower detects that a consumable part such as the cutting deck needs to be replaced, the corresponding information is transmitted to the terminal server through the wireless communication module 410 (for example, the 4G module), and the terminal server pushes the corresponding message to the user terminal to prompt the user to replace the consumable part in time.

When the attitude detection module 412 (for example, the IMU) detects that the vehicle overturns, the corresponding overturning state is sent to the server via the wireless communication module 410 (for example, the 4G module), and the server pushes the relevant overturning information to the user.

In some examples, the wireless communication module 410 may be fixedly mounted below the cover of the operating assembly 50. In other examples, the wireless communication module 410 may be integrated into the display screen. In some examples, the wireless communication module 410 is integrated into the display screen and connected to the positioning module 411 and the attitude detection module 412 in a bus connection manner. In other examples, the wireless communication module 410, the positioning module 411, and the attitude detection module 412 are integrated on the same circuit board. At least one of the following is used as the power supply of the wireless communication module 410: the battery pack 21 and an independent backup power supply. The independent backup power supply can be charged by the battery pack 21 or charge the battery pack 21. Specifically, the wireless communication module 410 performs data transmission. Preferably, the wireless communication module 410, the positioning module 411, and the attitude detection module 412 may be integrated and placed below the cover of a left operating assembly 50.

In an example, the wireless communication module 410, the positioning module 411, and the attitude detection module 412 are powered in the following two methods: first, directly using the battery pack 21 on the mower for power supply; and second, using the battery pack 21 and the independent backup power supply (for example, a battery module) for power supply. The independent backup power supply may be a rechargeable battery non-detachably fixed near the power supply assembly 20. The independent backup power supply can be charged by the battery pack 21 or charge the battery pack 21. When the battery pack 21 has power, the battery pack 21 supplies power to the module; and when the battery pack 21 has no power or is unplugged, the independent backup power supply supplies power to the module.

Based on the same concept, the present application further provides a manned mower. The manned mower includes the vehicle frame 11 and the support portion mounted to the vehicle frame 11 and used for supporting the operator; the traveling wheel set 41 connected to and supporting the vehicle frame 11, where the traveling wheel set 41 is driven by the traveling electric motors 42; the mowing element driven by the mowing electric motor M; the controller configured to output control signals to control the operation of the traveling electric motors 42 or the mowing electric motor M; and the wireless communication module configured to be capable of communicating bidirectionally with the external device and used for transmitting data information to the external device and receiving the input information from the external device. The controller is configured to control the manned mower to enter the remote control mode in response to the input information from the external device at least when it is detected that no operator is on the support portion. In the remote control mode, the controller is configured to control the operation of the manned mower based on the input information from the external device.

Optionally, the input information from the external device includes at least one of the following: a remote connection instruction, a traveling direction, a mowing direction, a traveling speed, a mowing speed, and a software update data packet.

In some examples, for example, when the traveling trajectory is recorded, the first preset condition is that the rotational speed is less than or equal to 10 mph. In some examples, the first preset condition is that the rotational speed is less than or equal to 8 mph. In some examples, the first preset condition is that the rotational speed is less than or equal to 6 mph. In some examples, the first preset condition is that the rotational speed is less than or equal to 4 mph. In some examples, for example, when the position of the mower is retrieved, the first preset condition is that the rotational speed is less than or equal to 2 mph.

Optionally, the manned mower further includes a positioning module integrated with the wireless communication module. The positioning module is configured to record the traveling trajectory, mowing trajectory, and real-time position of the manned mower, and the traveling trajectory, mowing trajectory, and real-time position are sent to the terminal server through the wireless communication module.

Optionally, the manned mower further includes an attitude detection module for detecting the overturning state of the manned mower. The wireless communication module is further configured to send the overturning state to the terminal server, and the terminal server pushes the overturning state to the user.

Optionally, the manned mower further includes an alarm module connected to the wireless communication module or the controller. The wireless communication module is further configured to receive the alarm control command issued by the terminal server, and the alarm module sends alarm information.

Optionally, the wireless communication module is fixedly mounted below the cover of the operating assembly 50; the wireless communication module is connected to the positioning module and the attitude detection module in the bus connection manner; at least one of the following is used as the power supply of the wireless communication module: the battery pack 21 and an independent backup power supply, where the independent backup power supply can be charged by the battery pack 21 or charge the battery pack 21.

Optionally, the data transmission manner of the wireless communication module includes at least one of the following: Bluetooth, Wi-Fi, ZigBee, LoRa, or 4G. The data transmission manner of the wireless communication module 410 further includes 433 MHz wireless communication, 915 MHz wireless communication, 2.4 GHz wireless communication, 5.8 GHz wireless communication, and other wireless communication manners in open radio frequency bands that do not require a license.

Based on the same inventive concept, the present application further provides a manned mower having a driving mode and a remote control mode. The manned mower of the present application includes the vehicle frame 11 and the support portion mounted to the vehicle frame 11 and used for supporting the operator; the traveling wheel set 41 connected to and supporting the vehicle frame 11, where the traveling wheel set 41 is driven by the traveling electric motors 42; the mowing element driven by the mowing electric motor; and the power supply assembly 20 including at least one battery pack 21 and used for supplying power to the traveling electric motors 42 and the mowing electric motor. As shown in FIG.

41, the manned mower of the present application further includes the MCU configured to output control signals to control the operation of the traveling electric motors or the mowing electric motor; the wireless communication module 410 configured to be capable of communicating bidirectionally with the external device and used for transmitting data information to the external device and receiving the input information from the external device; and the controller configured to control the manned mower to enter the driving mode in response to the operation of the operator on the support portion and configured to control the manned mower to enter the remote control mode in response to the input information from the external device.

The present application further provides an outdoor traveling device in which an eddy-current sensor is integrated inside the electric motor and used for detecting the rotor position of the electric motor. The waterproof requirements are low, and the structural reliability is high, which is conducive to improving detection accuracy. The manned mower of the present application includes the vehicle frame 11; the traveling wheel set 41 connected to and supporting the vehicle frame 11; the traveling electric motors 42 connected to the traveling wheel set 41 and used for driving the traveling wheel set 41 to rotate to drive the outdoor traveling device to move on the ground; and the power supply assembly 20 including at least one battery pack 21. In some examples, the output power of the traveling electric motors 42 is greater than or equal to 2 kW. In some examples, the total energy of the power supply assembly 20 is greater than or equal to 2 kW·h. At least part of the power supply assembly 20 is detachably mounted to the manned mower.

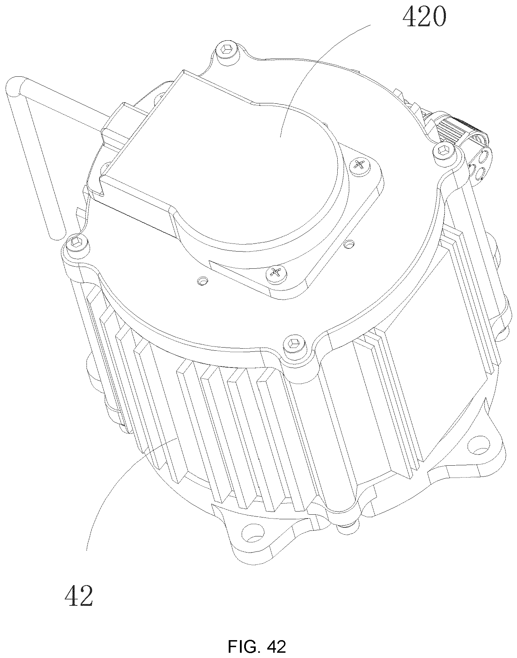

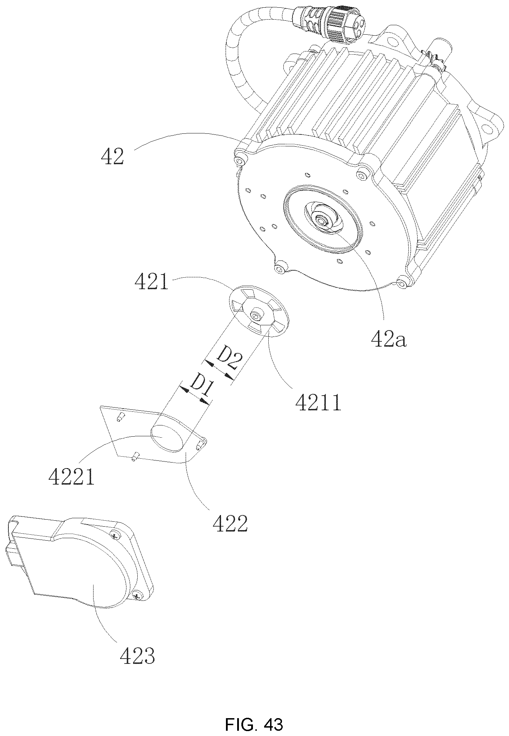

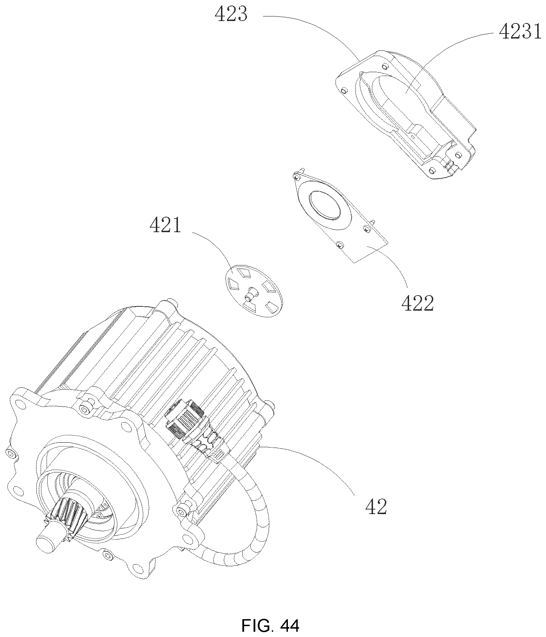

As shown in FIGS. 42 to 44, the manned mower of the present application further includes an eddy-current sensor 420 mounted on the traveling electric motor 42 and used for detecting the rotor position of the traveling electric motor 42. In some examples, the eddy-current sensor 420 includes a target 421 and a sensor circuit board 422. The target 421 is fixedly connected to the rotor of the traveling electric motor 42. The sensor circuit board 422 and the target 421 are opposite to each other and mounted on the traveling electric motor 42. The power supply assembly 20 is used for supplying power to the traveling electric motor 42 and the sensor circuit board 422.

The target 421 includes multiple metal plates 4211 in a fan-shaped structure. The target 421 is fixed to a rotor shaft 42a of the traveling electric motor 42 by screws so that the target 421 and the rotor shaft 42a of the traveling electric motor 42 rotate synchronously. In some examples, the target 421 includes at least one limiting portion, such as a flat portion or a protrusion, for fixing between the target 421 and the rotor shaft. When the traveling electric motor 42 operates, an electrical signal is generated in the target 421. The electrical signal can form a waveform on the sensor circuit board 422 for detecting the rotor position of the traveling electric motor 42. In some examples, the target 421 includes multiple metal plates in a fan-shaped structure embedded in the insulation material. The target 421 is fixed to the rotor shaft and rotates synchronously with the rotor shaft. Specifically, the sensor circuit board 422 is provided with a transmitting coil and a receiving coil. The transmitting coil can transmit the alternating excitation signal, the alternating excitation signal generates an alternating electromagnetic field in space, and the receiving coil can receive the signal generated by the alternating electromagnetic field. The target 421 induces the eddy current under the action of the alternating electromagnetic field, and the eddy current generates a secondary electromagnetic signal field. When the sensor circuit board 422 and the target 421 move relative to each other, the signal received by the receiving coil of the sensor circuit board 422 changes. The sensor circuit board 422 may acquire the relative position between the sensor circuit board and the target, that is, acquire the rotor position, by demodulating and processing the received signal. At this time, the sensor circuit board 422 outputs a corresponding signal so that the controller controls the operation of the traveling electric motor based on the signal outputted by the sensor circuit board 422.

The sensor circuit board 422 is a printed circuit board integrated with a sensor detection circuit. The sensor circuit board 422 is provided with a through hole 4221. The diameter D1 of the through hole 4221 matches the diameter of the rotor shaft 42a of the traveling electric motor 42. In some examples, the diameter D1 of the through hole 4221 is less than or equal to the diameter D2 of a fan-shaped region on the target 421.

The eddy-current sensor 420 further includes a protective cover 423. The protective cover 423 is provided with a mounting hole, and the mounting hole is used for fixing the protective cover to the traveling electric motor 42 so that the protective cover 423 covers a side of the target 421 and the sensor circuit board 422 facing away from the traveling electric motor 42. In some examples, a circuit board mounting groove 4231 is provided on a side of the protective cover 423 facing the traveling electric motor 42, and the circuit board mounting groove 4231 is used for fixing the sensor circuit board 422. Specifically, the sensor circuit board 422 may be fixed in the circuit board mounting groove 4231 using screws to form an eddy-current assembly. The eddy-current assembly is fixed to an end surface of the traveling electric motor 42 by screws.

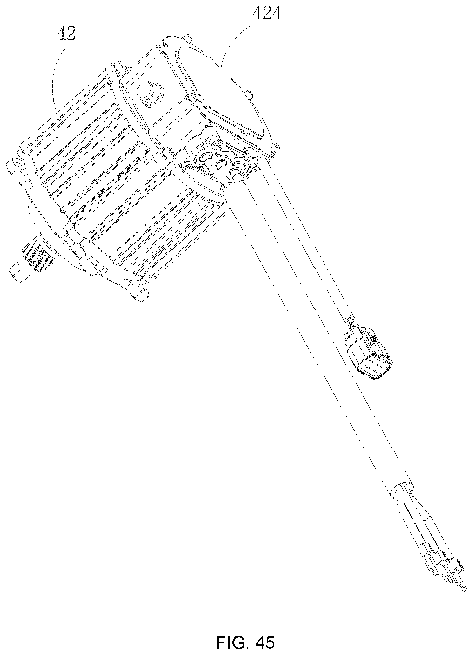

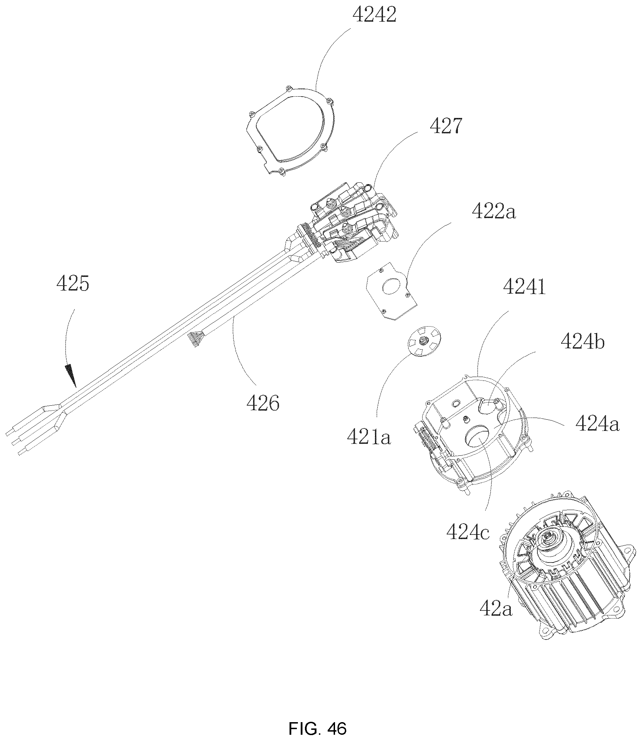

As shown in FIGS. 45 and 46, the traveling electric motor 42 includes a rear end cover 424, a three-phase power line 425, and a signal line 426. The rear end cover 424 includes a first end cover portion 4241 and a second end cover portion 4242 detachably mounted on the first end cover portion 4241, and the first end cover portion 4241 and the second end cover portion 4242 form an accommodation space 424a for accommodating and fixing at least part of the three-phase power line 425 and at least part of the signal line 426 and mounting a target 421a and a sensor circuit board 422a. Specifically, a first through hole 424b allowing the three-phase power line 425 to pass through is formed on the first end cover portion 4241, the three-phase power line 425 is mounted to a fixing member 427, and the fixing member 427 is fixed in the first end cover portion 4241 by screw fastening and is located in the accommodation space 424a. A second through hole 424c is further formed on the first end cover portion 4241, and the rotor shaft 42a extends into the accommodation space 424a through the second through hole 424c. The target 421a is fixedly mounted to the rotor shaft 42a by screws and rotates with the rotor shaft 42a. The sensor circuit board 422a is fixedly mounted to a side of the fixing member 427 facing away from the three-phase power line 425.

Based on the same concept, the present application further provides the outdoor traveling device 100 in which an eddy-current sensor is integrated inside the electric motor and used for detecting the rotor position of the electric motor. The waterproof requirements are low, and the structural reliability is high, which is conducive to improving detection accuracy. The outdoor traveling device 100 of the present application includes the vehicle frame 11; the traveling wheel set 41 connected to and supporting the vehicle frame 11; the traveling electric motors 42 connected to the traveling wheel set 41 and used for driving the traveling wheel set 41 to rotate to drive the outdoor traveling device 100 to move on the ground; and a drive motor connected to a work attachment and used for driving the work attachment to operate. As shown in FIGS. 42 to 44, the outdoor traveling device 100 of the present application further includes the eddy-current sensor 420 mounted on the traveling electric motor 42 and including the target 421 and the sensor circuit board 422 opposite to the target 421, where the target 421 is fixedly connected to the rotor of the traveling electric motor 42 or the drive motor; and the power supply assembly 20 including at least one battery pack 21 and used for supplying power to the traveling electric motor 42, the drive motor, and the sensor circuit board 422.

Optionally, the target 421 rotates synchronously with the rotor shaft of the traveling electric motor 42 or the drive motor and generates an electrical signal, and the electrical signal can form a waveform on the sensor circuit board 422.

Optionally, the eddy-current sensor 420 further includes the protective cover provided with a mounting hole. The mounting hole is used for fixing the protective cover to the traveling electric motor 42 or the drive motor so that the protective cover is disposed on a side of the target 421 and the sensor circuit board 422 facing away from the traveling electric motor 42 or the drive motor. The circuit board mounting groove is provided on a side of the protective cover facing the traveling electric motor 42 or the drive motor, and the circuit board mounting groove is used for fixing the sensor circuit board 422.

Optionally, the total energy of the power supply assembly 20 is greater than or equal to 2 kW·h.

Optionally, at least part of the power supply assembly 20 is detachably mounted to the outdoor traveling device 100.

Optionally, the output power of the traveling electric motors 42 is greater than or equal to 2 kW

Optionally, the drive motor includes a snow removal electric motor or a mowing electric motor.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

**Claims**

1. A manned mower (100), comprising:

   a traveling wheel set (41) comprising first traveling wheels (411) and second traveling wheels (412);
   a vehicle frame (11) connecting the first traveling wheels and the second traveling wheels;
   a support portion mounted on the vehicle frame and used for supporting an operator;
   a traveling electric motor (42) having a drive shaft and used for driving the traveling wheel set; and
   a power supply assembly (20) used for supplying power to at least the traveling electric motor and comprising at least one detachable battery pack (21);
   wherein the vehicle frame comprises a left bracket portion (11a) and a right bracket portion (11b) for supporting the power supply assembly, the power supply assembly is disposed between the left bracket portion and the right bracket portion; and
   a maximum inner width W1 of the left bracket portion and the right bracket portion in a left and right direction is less than or equal to 700 mm, and total energy of a single row of the power supply assembly along the left and right direction is greater than or equal to 8 kW·h.

2. The manned mower of claim 1, wherein the total energy of a single row of the power supply assembly along the left and right direction is greater than or equal to 9 kW·h.

3. The manned mower of claim 1, wherein at least part of the power supply assembly is disposed behind the support portion.

4. The manned mower of claim 1, wherein total energy of the power supply assembly is greater than or equal to 8 kW·h.

**5.** The manned mower of claim 1, wherein the single row of the power supply assembly comprises one battery pack.

**6.** The manned mower of claim 1, wherein the single row of the power supply assembly comprises a plurality of battery packs.

**7.** The manned mower of claim 1, wherein the power supply assembly comprises a plurality of single rows, and at least one of the plurality of single rows is disposed along a first direction basically parallel to the left and right direction.

**8.** The manned mower of claim 1, wherein energy of the at least one detachable battery pack is greater than or equal to 2 kW·h.

**9.** The manned mower of claim 1, wherein a battery pack of the at least one detachable battery pack comprises a plurality of cells, and the plurality of cells comprise a lithium iron phosphate cell.

**10.** The manned mower of claim 1, wherein a height H of the power supply assembly in an up and down direction is greater than or equal to 330 mm, and a width of the power supply assembly in the left and right direction is greater than or equal to 600 mm and less than or equal to 700 mm.

**11.** The manned mower of claim 1, wherein the power supply assembly further comprises a connector for mounting the at least one detachable battery pack to connect the at least one detachable battery pack to the vehicle frame, and the at least one detachable battery pack and the connector are used as a whole capable of being removed from the manned mower and mounted to another manned mower to supply power to the another manned mower.

**12.** The manned mower of claim 11, wherein the connector (22) comprises at least one first connector (22a) and at least one second connector (22b), and the at least one first connector and the at least one second connector have different shapes.

**13.** The manned mower of claim 12, wherein a total number of battery packs adaptable to the first connector is different from a total number of battery packs adaptable to the second connector.

**14.** The manned mower of claim 11, wherein the connector comprises at least a first coupling portion (222) electrically connected to a battery pack of the at least one detachable battery pack and a third coupling portion (224) for limiting the battery pack mounted on the connector, and the first coupling portion and the third coupling portion are opposite to each other.

**15.** The manned mower of claim 14, wherein the first coupling portion comprises a locking assembly (2221) and a compartment terminal assembly (2222), the battery pack comprises a terminal assembly (2111) adaptable to the compartment terminal assembly, and a rated value of a current outputted by the battery pack through the connector is greater than or equal to 120 A.

100

Up

Rear

Right

Left

12

Front

Down

50

91

70

10

30

40

FIG. 1

100

50

51

20

41

412

30

411

FIG. 2

23

232

20

21

21

21

22

233

231

22

FIG. 3

FIG. 4

21

22a

FIG. 5A

21    21    21

22b

FIG. 5B

FIG. 6

FIG. 7

11

11b

20

11a

FIG. 8

FIG. 9

22a

22b

FIG. 10A

22b

22b

FIG. 10B

22a

22a

22a

22a

FIG. 10C

21a

21a

22b

21b

FIG. 11

Left ◄──────► Right

411L

411R

11

42    42

412L

412R

11a

11b

W1

FIG. 12

FIG. 13

FIG. 14A

92

96

94

FIG. 14B

941

9432

943

101

942

FIG. 15A

921

9434

9433

9431

FIG. 15B

70

71

FIG. 16

FIG. 17

712

752

752

75

751

73

76

713

76

FIG. 18

722          722          722

72

721

721

FIG. 19

752

7521

7522

FIG. 20

123

122

121

11

FIG. 21

123

121

1211

1243

124

1241

1242

FIG. 22

FIG. 23

FIG. 24

250

Q1 Q3 Q5

Q2 Q4 Q6

Power
supply
assembly

C

M/
42

20

FIG. 25

260

260A

Q

260B

C

FIG. 26

FIG. 27A

261

FIG. 27B

FIG. 28A

<u>280</u>

281                              281

283

FIG. 28B

290

Q

260A

260B

C

FIG. 29A

290

260A

260

282

FIG. 29B

S301

Acquire the first electrical parameter related to the current of the mowing electric motor

S302

When the first electrical parameter satisfies the first preset condition, limit the first electrical parameter within the preset range

S303

When the first electrical parameter is limited within the preset range, selectively use the first method or the second method to determine the rotor position of the mowing electric motor M so that the mowing electric motor M does not stop when the first electrical parameter is within the preset range

FIG. 30

S311

Acquire the first electrical parameter related to the current of the mowing electric motor

S312

When the first electrical parameter satisfies the first preset condition, limit the first electrical parameter within the preset range

S313

Acquire the second electrical parameter related to the rotational speed of the mowing electric motor

S314

Does the second electrical parameter satisfy the second preset condition?

Yes

S315

Determine the rotor position of the mowing electric motor using the first method

No

No

S316

Does the second electrical parameter satisfy the third preset condition?

Yes

S317

Determine the rotor position of the mowing electric motor M using the second method

FIG. 31

FIG. 32

330

331    332

FIG. 33

20

Power supply
assembly

Vp

VHM

341    340

DC/DC

Power
module

Controller

250

Driver
circuit

M

FIG. 34

FIG. 35

FIG. 36A

FIG. 36B

FIG. 37

FIG. 38

FIG. 39A

391

P+
D
IOT
P-

390

Adapter

Protocol
conversion
module

391

P+
D
IOT
P-

23

P_1+
C_1+

P_1-

P_2-

OUT+

OUT-

FIG. 39B

391

P+
D
IOT
P-

390

Adapter

Protocol
conversion
module

391

P+
D
IOT
P-

23

P_1+
C_1+

P_1-

P_2-

OUT+

OUT-

FIG. 39C

S401

Acquire the total current value outputted by the power supply assembly and the current state of the power supply assembly, where the current state of the power supply assembly includes the maximum discharge capacity of the power supply assembly

S402

Determine the current threshold according to the maximum discharge capacity

S403

Is the total current value greater than the current threshold?

No

Yes

S404

Acquire the duration of the current state (that is, the state in which the maximum discharge capacity is relatively low)

S405

Is the duration of the current state greater than the time threshold?

No

Yes

S406

Control the manned mower to enter a power limiting mode

FIG. 40A

S406

Control the manned mower to enter a power limiting mode

S407

Acquire the traveling electrical parameters of the traveling electric motors and determine the upper limit threshold and the lower limit threshold based on the traveling electrical parameters

S408

Is the maximum discharge capacity greater than the upper limit threshold?

Yes → S409

Determine the output power of the mowing electric motor according to the total current value and the traveling electrical parameters

No

S410

Is the maximum discharge capacity less than the lower limit threshold?

Yes → S411

Control the mowing electric motor to stop and limit the output power of the traveling electric motors based on the maximum discharge capacity

No

S412

Determine whether the following is satisfied: the total current value is less than the preset current value and both the mowing electric motor and the traveling electric motors stop operating

Yes → S413

Disable the power limiting mode

No

FIG. 40B

EP 4 497 315 A1

411

Positioning
module

413

Alarm module

240

Controller

410

Wireless
communication
module

412

Attitude
detection module

FIG. 41

67

FIG. 42

FIG. 43

423

4231

421

422

42

FIG. 44

424

42

FIG. 45

FIG. 46

Europäisches
Patentamt

European
Patent Office

Office européen
des brevets

# EUROPEAN SEARCH REPORT

**Application Number**

EP 24 18 5271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/225252 A1 (LIU QIAN [CN] ET AL) 20 July 2023 (2023-07-20) | 1-10 | INV. A01D34/64 |
| Y | * figures 1-7 * | 11,14,15 | A01D34/78 |
| A | * paragraphs [0116], [0222], [0226], [0227], [0247], [0272] - [0273] * | 12,13 | A01D69/02 B60K1/04 B60L50/60 |
| | ----- | | A01D101/00 |
| Y | WO 2021/134826 A1 (NANJING CHERVON IND CO LTD [CN]) 8 July 2021 (2021-07-08) * figures 1-12 * | 11,14,15 | |
| | ----- | | |
| A | WO 2021/071655 A1 (ARIENS CO [US]; HOLETON MICHAEL J [US] ET AL.) 15 April 2021 (2021-04-15) * figures 1-11 * * paragraphs [0101] - [0105] * | 1-15 | |
| | ----- | | |
| A | US 2021/354541 A1 (ZEILER JEFFREY [US] ET AL) 18 November 2021 (2021-11-18) * figures 1-4 * * paragraphs [0001] - [0091] * | 1-15 | |
| | ----- | | |

**TECHNICAL FIELDS SEARCHED (IPC)**

A01D
B60L
B60K

The present search report has been drawn up for all claims

| Place of search | Date of completion of the search | Examiner |
|---|---|---|
| Munich | 11 November 2024 | Rahbauer, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 497 315 A1**

## ANNEX TO THE EUROPEAN SEARCH REPORT
## ON EUROPEAN PATENT APPLICATION NO.

EP 24 18 5271

11-11-2024

| Patent document cited in search report | Publication date | Patent family member(s) | | Publication date |
|---|---|---|---|---|
| US 2023225252 A1 | 20-07-2023 | NONE | | |
| WO 2021134826 A1 | 08-07-2021 | AU | 2020417332 A1 | 23-06-2022 |
| | | CA | 3166334 A1 | 07-08-2021 |
| | | EP | 4056016 A1 | 14-09-2022 |
| | | WO | 2021134826 A1 | 08-07-2021 |
| WO 2021071655 A1 | 15-04-2021 | AU | 2020362049 A1 | 19-05-2022 |
| | | CA | 3154409 A1 | 15-04-2021 |
| | | CN | 115315177 A | 08-11-2022 |
| | | EP | 4040943 A1 | 17-08-2022 |
| | | US | 2023122499 A1 | 20-04-2023 |
| | | US | 2023182612 A1 | 15-06-2023 |
| | | WO | 2021071655 A1 | 15-04-2021 |
| US 2021354541 A1 | 18-11-2021 | EP | 3497776 A1 | 19-06-2019 |
| | | US | 2019160972 A1 | 30-05-2019 |
| | | US | 2021354541 A1 | 18-11-2021 |
| | | US | 2023234432 A1 | 27-07-2023 |
| | | WO | 2018031719 A1 | 15-02-2018 |